# EUROPEAN PATENT APPLICATION

(11) **EP 4 629 358 A1**
(43) Date of publication of application: **08.10.2025**
(21) Application number: 23897352.3
(22) Date of filing: 30.10.2023
(51) Int. Cl.: H01M 8/04858, F24H 1/00, F24H 15/225, F24H 15/258, F24H 15/355, F24H 15/395, H01M 8/0432, H01M 8/0438, H01M 8/04313, H01M 8/04694, H01M 8/04701

(54) **METHOD FOR CONTROLLING FUEL CELL DEVICE, CONTROL DEVICE, AND POWER GENERATING SYSTEM**

(30) Priority: 29.11.2022 JP 2022189911; 17.10.2023 JP 2023179010
(71) Applicant: Panasonic Intellectual Property Management Co., Ltd., Kadoma-shi, Osaka 571-0057 (JP)
(72) Inventor: ISE, Takehiko, Kadoma-shi, Osaka 571-0057 (JP); KANEKO, Yasushi, Kadoma-shi, Osaka 571-0057 (JP); TANAKA, Yoshikazu, Kadoma-shi, Osaka 571-0057 (JP); YOSHIHARA, Yasumichi, Kadoma-shi, Osaka 571-0057 (JP); TAGUCHI, Yoshifumi, Kadoma-shi, Osaka 571-0057 (JP)
(74) Representative: Grünecker Patent- und Rechtsanwälte PartG mbB
(86) International application number: PCT/JP2023/039127
(87) International publication number: WO 2024/116696

(57) **Abstract**

A fuel cell apparatus control method includes at least two of the steps of: reducing an output of a fuel cell apparatus that generates power using hydrogen from a hydrogen reservoir device upon a decrease in an amount of hydrogen in the hydrogen reservoir device; reducing the output of the fuel cell apparatus upon an increase in a temperature of a heating medium that collects exhaust heat from the fuel cell apparatus; and reducing the output of the fuel cell apparatus upon an increase in an air temperature inside or outside a housing of the fuel cell apparatus. **In** this control method, when the at least two of the steps are all executed, the output of the fuel cell apparatus is reduced by a largest one of amounts of output reduction of the fuel cell apparatus executed by the respective steps.

## Description

### Technical Field

The present disclosure relates to a fuel cell apparatus control method, a control apparatus, and a power generation system.

### Background Art

PTL 1 discloses restricting an output of a fuel cell upon a decrease in a gas pressure in a hydrogen tank.

### Citation List

### Patent Literature

PTL 1: Japanese Patent No. 5446025

### Summary of Invention

### Technical Problem

As an example, the present disclosure aims to provide a fuel cell apparatus control method, a control apparatus, and a power generation system with which the output of a fuel cell apparatus can be controlled properly by taking into consideration not only the amount of hydrogen in a hydrogen reservoir device, but also the temperature of a heating medium that collects exhaust heat from the fuel cell apparatus, the amount of heat stored in a heat storage device that stores exhaust heat from the fuel cell apparatus, or the air temperature inside or outside the housing of the fuel cell apparatus, unlike the prior art.

### Solution to Problem

A fuel cell apparatus control method according to an aspect of the present disclosure to solve the above problem includes at least two of the steps of: reducing an output of a fuel cell apparatus that generates power using hydrogen from a hydrogen reservoir device upon a decrease in an amount of hydrogen in the hydrogen reservoir device; reducing the output of the fuel cell apparatus upon an increase in a temperature of a heating medium that collects exhaust heat from the fuel cell apparatus; and reducing the output of the fuel cell apparatus upon an increase in an air temperature inside or outside a housing of the fuel cell apparatus, in which when the at least two of the steps are all executed, the output of the fuel cell apparatus is reduced by a largest one of amounts of output reduction of the fuel cell apparatus executed in the respective steps.

A fuel cell apparatus control method according to another aspect of the present disclosure includes at least two of the steps of: reducing an output of a fuel cell apparatus that generates power using hydrogen from a hydrogen reservoir device upon a decrease in an amount of hydrogen in the hydrogen reservoir device; reducing the output of the fuel cell apparatus upon an increase in an amount of heat stored in a heat storage device that stores exhaust heat from the fuel cell apparatus; and reducing the output of the fuel cell apparatus upon an increase in an air temperature inside or outside a housing of the fuel cell apparatus, in which when the at least two of the steps are all executed, the output of the fuel cell apparatus is reduced by a largest one of amounts of output reduction of the fuel cell apparatus executed in the respective steps.

A control apparatus according to still another aspect of the present disclosure includes: a communicator that receives at least two of the following pieces of information: information indicating an amount of hydrogen in a hydrogen reservoir device, information indicating a temperature of a heating medium that collects exhaust heat from a fuel cell apparatus that generates power using hydrogen from the hydrogen reservoir device, and information indicating an air temperature inside or outside a housing of the fuel cell apparatus; and a controller that executes at least two of the following controls: control to reduce an output of the fuel cell apparatus upon a decrease in the amount of hydrogen in the hydrogen reservoir device, control to reduce the output of the fuel cell apparatus upon an increase in the temperature of the heating medium, and control to reduce the output of the fuel cell apparatus upon an increase in the air temperature inside or outside the housing of the fuel cell apparatus, in which when the at least two of the controls are all executed, the controller reduces the output of the fuel cell apparatus by a largest one of amounts of output reduction of the fuel cell apparatus executed by the respective controls.

A control apparatus according to still another aspect of the present disclosure includes: a communicator that receives at least two of the following pieces of information: information indicating an amount of hydrogen in a hydrogen reservoir device, information indicating an amount of heat stored in a heat storage device that stores exhaust heat from a fuel cell apparatus that generates power using hydrogen from the hydrogen reservoir device, and information indicating an air temperature inside or outside a housing of the fuel cell apparatus; and a controller that executes at least two of the following controls: control to reduce an output of the fuel cell apparatus upon a decrease in the amount of hydrogen in the hydrogen reservoir device, control to reduce the output of the fuel cell apparatus upon an increase in the amount of heat stored in the heat storage device, and control to reduce the output of the fuel cell apparatus upon an increase in the air temperature inside or outside the housing of the fuel cell apparatus, in which when the at least two of the controls are all executed, the controller reduces the output of the fuel cell apparatus by a largest one of amounts of output reduction of the fuel cell apparatus executed by the respective controls.

Also, a power generation system of one aspect of the present disclosure includes a fuel cell apparatus and the control apparatus described above.

### Advantageous Effects of Invention

The fuel cell apparatus control method, the control apparatus, and the power generation system of an aspect of the present disclosure offer an advantage effect of being able to properly control the output of a fuel cell apparatus by taking into consideration not only the amount of hydrogen in the hydrogen reservoir device, but also the temperature of a heating medium that collects exhaust heat from the fuel cell apparatus, the amount of heat stored in the heat storage device that stores exhaust heat from the fuel cell apparatus, or the air temperature inside or outside the housing of the fuel cell apparatus, unlike the prior art.

### Brief Description of Drawings

[Fig. 1] Fig. 1 is a diagram illustrating an example of a power generation system of a first embodiment.
[Fig. 2] Fig. 2 is a diagram illustrating an example of a control apparatus in Fig. 1.
[Fig. 3] Fig. 3 is a flowchart illustrating an example of the operation of the control apparatus in the power generation system (a fuel cell apparatus control method) in the first embodiment.
[Fig. 4A] Fig. 4A is a flowchart illustrating an example of the operation of the control apparatus in the power generation system (a fuel cell apparatus control method) in a first example of the first embodiment.
[Fig. 4B] Fig. 4B is a flowchart illustrating an example of the operation of the control apparatus in the power generation system (a fuel cell apparatus control method) in a second example of the first embodiment.
[Fig. 4C] Fig. 4C is a flowchart illustrating an example of the operation of the control apparatus in the power generation system (a fuel cell apparatus control method) in a third example of the first embodiment.
[Fig. 4D] Fig. 4D is a flowchart illustrating an example of the operation of the control apparatus in the power generation system (a fuel cell apparatus control method) in a fourth example of the first embodiment.
[Fig. 5] Fig. 5 is a flowchart illustrating an example of the operation of the control apparatus in the power generation system (a fuel cell apparatus control method) in a second embodiment.
[Fig. 6A] Fig. 6A is a flowchart illustrating an example of the operation of the control apparatus in the power generation system (a fuel cell apparatus control method) in a first example of the second embodiment.
[Fig. 6B] Fig. 6B is a flowchart illustrating an example of the operation of the control apparatus in the power generation system (a fuel cell apparatus control method) in a second example of the second embodiment.
[Fig. 6C] Fig. 6C is a flowchart illustrating an example of the operation of the control apparatus in the power generation system (a fuel cell apparatus control method) in a third example of the second embodiment.
[Fig. 6D] Fig. 6D is a flowchart illustrating an example of the operation of the control apparatus in the power generation system (a fuel cell apparatus control method) in a fourth example of the second embodiment.
[Fig. 7A] Fig. 7A is a diagram illustrating an example of a sensor for deriving the amount of hydrogen in a hydrogen reservoir device.
[Fig. 7B] Fig. 7B is a diagram illustrating an example of a sensor for deriving the amount of hydrogen in the hydrogen reservoir device.
[Fig. 7C] Fig. 7C is a diagram illustrating an example of a sensor for deriving the amount of hydrogen in the hydrogen reservoir device.
[Fig. 8] Fig. 8 is a flowchart illustrating an example of the operation of the control apparatus in the power generation system (a fuel cell apparatus control method) in a third embodiment.
[Fig. 9A] Fig. 9A is a diagram illustrating an example of a sensor for deriving the temperature of a heating medium.
[Fig. 9B] Fig. 9B is a diagram illustrating an example of a sensor for deriving the temperature of the heating medium.
[Fig. 10] Fig. 10 is a flowchart illustrating an example of the operation of the control apparatus in the power generation system (a fuel cell apparatus control method) in a fourth embodiment.
[Fig. 11] Fig. 11 is a diagram illustrating an example of a sensor for deriving the amount of heat stored in a heat storage device.
[Fig. 12] Fig. 12 is a flowchart illustrating an example of the operation of the control apparatus in the power generation system (a fuel cell apparatus control method) in a fifth embodiment.
[Fig. 13A] Fig. 13A is a diagram illustrating an example of a sensor for deriving the air temperature inside or outside the housing of the fuel cell apparatus.
[Fig. 13B] Fig. 13B is a diagram illustrating an example of a sensor for deriving the air temperature inside or outside the housing of the fuel cell apparatus.
[Fig. 14] Fig. 14 is a flowchart illustrating an example of the operation of the control apparatus in the power generation system (a fuel cell apparatus control method) in a sixth embodiment.
[Fig. 15] Fig. 15 is a diagram illustrating an example of a power generation system of a seventh embodiment.

### Description of Embodiments

PTL 1 states controlling the output of a fuel cell apparatus according to the amount of hydrogen in the hydrogen reservoir device, but does not state controlling the output of the fuel cell apparatus by also taking into consideration the temperature of the heating medium that collects exhaust heat from the fuel cell apparatus, the amount of heat stored in the heat storage device that stores exhaust heat from the fuel cell apparatus, or the air temperature inside or outside the housing of the fuel cell apparatus.

A fuel cell apparatus control method according to a first aspect of the present disclosure includes at least two of the steps of: reducing an output of a fuel cell apparatus that generates power using hydrogen from a hydrogen reservoir device upon a decrease in an amount of hydrogen in the hydrogen reservoir device; reducing the output of the fuel cell apparatus upon an increase in a temperature of a heating medium that collects exhaust heat from the fuel cell apparatus; and reducing the output of the fuel cell apparatus upon an increase in an air temperature inside or outside a housing of the fuel cell apparatus, in which when the at least two of the steps is all executed, the output of the fuel cell apparatus is reduced by a largest one of amounts of output reduction of the fuel cell apparatus executed in the respective steps.

According to the above, in the fuel cell apparatus control method of the present aspect, the output of the fuel cell apparatus can be properly reduced by taking into consideration not only a decrease in the amount of hydrogen in the hydrogen reservoir device, but also an increase in the temperature of the heating medium that collects exhaust heat from the fuel cell apparatus or an increase in the air temperature inside or outside the housing of the fuel cell apparatus, unlike the prior art.

The smaller the amount of hydrogen in the hydrogen reservoir device, the higher the possibility of the fuel cell apparatus running out of hydrogen needed for power generation. Hence, in that case, the output of the fuel cell apparatus needs to be reduced. Also, the fuel cell apparatus has an optimal temperature range as its operation temperature, and the higher the temperature of the heating medium, the more difficult it is for the heating medium to properly collect exhaust heat from the fuel cell apparatus. Then, there is a high possibility of the operation temperature of the fuel cell apparatus exceeding the optimal temperature range. Also, the higher the air temperature inside or outside of the fuel cell apparatus, the higher the possibility of the operation temperature of the fuel cell apparatus exceeding the optimal temperature range. Hence, in those cases, the output of the fuel cell apparatus needs to be reduced.

Thus, in the fuel cell apparatus control method of the present aspect, the output of the fuel cell apparatus is reduced by the largest one of the amounts of output reduction of the fuel cell apparatus executed in the respective steps described above, so that the possibility of the fuel cell apparatus running out of hydrogen needed for power generation and the possibility of the operation temperature of the fuel cell apparatus exceeding the optimal temperature range can both be lowered, compared to a case where the output of the fuel cell apparatus is controlled without consideration of the relation between the magnitudes of these amounts of output reduction.

According to a second aspect of the present disclosure, in the fuel cell apparatus control method according to the first aspect, the at least two of the steps may be the step of reducing the output of the fuel cell apparatus that generates power using hydrogen from the hydrogen reservoir device upon the decrease in the amount of hydrogen in the hydrogen reservoir device and the step of reducing the output of the fuel cell apparatus upon the increase in a temperature of the heating medium that collects exhaust heat from the fuel cell apparatus, and when the output reduction of the fuel cell apparatus due to the decrease in the amount of hydrogen in the hydrogen reservoir device and the output reduction of the fuel cell apparatus due to the increase in the temperature of the heating medium are both executed, the output of the fuel cell apparatus may be reduced by a larger one of an amount of the output reduction of the fuel cell apparatus due to the decrease in the amount of hydrogen in the hydrogen reservoir device and an amount of the output reduction of the fuel cell apparatus due to the increase in the temperature of the heating medium.

The smaller the amount of hydrogen in the hydrogen reservoir device, the higher the possibility of the fuel cell apparatus running out of hydrogen needed for power generation. Hence, in that case, the output of the fuel cell apparatus needs to be reduced. Also, the fuel cell apparatus has an optimal temperature range as its operation temperature, and the higher the temperature of the heating medium, the more difficult it is for the heating medium to properly collect exhaust heat from the fuel cell apparatus. Then, there is a high possibility of the operation temperature of the fuel cell apparatus exceeding the optimal temperature range. Hence, in that case, the output of the fuel cell apparatus needs to be reduced.

Thus, in the fuel cell apparatus control method of the present aspect, the output of the fuel cell apparatus is reduced by the larger one of the amounts of output reduction of the fuel cell apparatus executed in the two steps described above, so that the possibility of the fuel cell apparatus running out of hydrogen needed for power generation and the possibility of the operation temperature of the fuel cell apparatus exceeding the optimal temperature range can both be lowered, compared to a case where the output of the fuel cell apparatus is controlled without consideration of the relation between the magnitudes of these amounts of output reduction.

According to a third aspect of the present disclosure, in the fuel cell apparatus control method according to the first aspect, the at least two of the steps may be the step of reducing the output of the fuel cell apparatus that generates power using hydrogen from the hydrogen reservoir device upon the decrease in an amount of hydrogen in the hydrogen reservoir device and the step of reducing the output of the fuel cell apparatus upon the increase in the air temperature inside or outside the housing of the fuel cell apparatus, and when the output reduction of the fuel cell apparatus due to the decrease in the amount of hydrogen in the hydrogen reservoir device and the output reduction of the fuel cell apparatus due to the increase in the air temperature inside or outside the housing of the fuel cell apparatus are both executed, the output of the fuel cell apparatus may be reduced by a larger one of an amount of the output reduction of the fuel cell apparatus due to the decrease in the amount of hydrogen in the hydrogen reservoir device and an amount of the output reduction of the fuel cell apparatus due to the increase in the air temperature inside or outside the housing of the fuel cell apparatus.

The smaller the amount of hydrogen in the hydrogen reservoir device, the higher the possibility of the fuel cell apparatus running out of hydrogen needed for power generation. Hence, in that case, the output of the fuel cell apparatus needs to be reduced. Also, the fuel cell apparatus has an optimal temperature range as its operation temperature, and the higher the air temperature inside or outside the housing of the fuel cell apparatus, the higher the possibility of the operation temperature of the fuel cell apparatus exceeding the optimal temperature range. Hence, in that case, the output of the fuel cell apparatus needs to be reduced.

Thus, in the fuel cell apparatus control method of the present aspect, the output of the fuel cell apparatus is reduced by the larger one of the amounts of output reduction of the fuel cell apparatus executed in the two steps described above, so that the possibility of the fuel cell apparatus running out of hydrogen needed for power generation and the possibility of the operation temperature of the fuel cell apparatus exceeding the optimal temperature range can both be lowered, compared to a case where the output of the fuel cell apparatus is controlled without consideration of the relation between the magnitudes of these amounts of output reduction.

According to a fourth aspect of the present disclosure, in the fuel cell apparatus control method according to the first aspect, the at least two of the steps may be the step of reducing the output of the fuel cell apparatus upon the increase in the temperature of the heating medium that collects exhaust heat from the fuel cell apparatus and the step of reducing the output of the fuel cell apparatus upon the increase in the air temperature inside or outside the housing of the fuel cell apparatus, and when the output reduction of the fuel cell apparatus due to the increase in the temperature of the heating medium and the output reduction of the fuel cell apparatus due to the increase in the air temperature inside or outside the housing of the fuel cell apparatus are both executed, the output of the fuel cell apparatus may be reduced by a larger one of an amount of the output reduction of the fuel cell apparatus due to the increase in the temperature of the heating medium and an amount of the output reduction of the fuel cell apparatus due to the increase in the air temperature inside or outside the housing of the fuel cell apparatus.

The fuel cell apparatus has an optimal temperature range as its operation temperature, and the higher the temperature of the heating medium, the more difficult it is for the heating medium to properly collect exhaust heat from the fuel cell apparatus. Then, there is a high possibility of the operation temperature of the fuel cell apparatus exceeding the optimal temperature range. Also, the higher the air temperature inside or outside of the fuel cell apparatus, the higher the possibility of the operation temperature of the fuel cell apparatus exceeding the optimal temperature range. Hence, in those cases, the output of the fuel cell apparatus needs to be reduced.

Thus, in the fuel cell apparatus control method of the present aspect, the output of the fuel cell apparatus is reduced by the larger one of the amounts of output reduction of the fuel cell apparatus executed in the two steps described above, so that the possibility of the operation temperature of the fuel cell apparatus exceeding the optimal temperature range can be lowered, compared to a case where the output of the fuel cell apparatus is controlled without consideration of the relation between the magnitudes of these amounts of output reduction.

According to a fifth aspect of the present disclosure, in the fuel cell apparatus control method according to the first aspect, the at least two of the steps may be the step of reducing the output of the fuel cell apparatus that generates power using hydrogen from the hydrogen reservoir device upon the decrease in the amount of hydrogen in the hydrogen reservoir device, the step of reducing the output of the fuel cell apparatus upon the increase in the temperature of the heating medium that collects exhaust heat from the fuel cell apparatus, and the step of reducing the output of the fuel cell apparatus upon the increase in the air temperature inside or outside the housing of the fuel cell apparatus, and when the output reduction of the fuel cell apparatus due to the decrease in the amount of hydrogen in the hydrogen reservoir device, the output reduction of the fuel cell apparatus due to the increase in the temperature of the heating medium, and the output reduction of the fuel cell apparatus due to the increase in the air temperature inside or outside the housing of the fuel cell apparatus are all executed, the output of the fuel cell apparatus may be reduced by a largest one of an amount of the output reduction of the fuel cell apparatus due to the decrease in the amount of hydrogen in the hydrogen reservoir device, an amount of the output reduction of the fuel cell apparatus due to the increase in the temperature of the heating medium, and an amount of the output reduction of the fuel cell apparatus due to the increase in the air temperature inside or outside the housing of the fuel cell apparatus.

The smaller the amount of hydrogen in the hydrogen reservoir device, the higher the possibility of the fuel cell apparatus running out of hydrogen needed for power generation. Hence, in that case, the output of the fuel cell apparatus needs to be reduced. Also, the fuel cell apparatus has an optimal temperature range as its operation temperature, and the higher the temperature of the heating medium, the more difficult it is for the heating medium to properly collect exhaust heat from the fuel cell apparatus. Then, there is a high possibility of the operation temperature of the fuel cell apparatus exceeding the optimal temperature range. Also, the higher the air temperature inside or outside of the fuel cell apparatus, the higher the possibility of the operation temperature of the fuel cell apparatus exceeding the optimal temperature range. Hence, in those cases, the output of the fuel cell apparatus needs to be reduced.

Thus, the output of the fuel cell apparatus is reduced by the largest one of the amounts of output reduction of the fuel cell apparatus executed in the three steps described above, so that the possibility of the fuel cell apparatus running out of hydrogen needed for power generation and the possibility of the operation temperature of the fuel cell apparatus exceeding the optimal temperature range can both be lowered, compared to a case where the output of the fuel cell apparatus is controlled without consideration of the relation between the magnitudes of these amounts of output reduction.

A fuel cell apparatus control method according to a sixth aspect of the present disclosure includes at least two of the steps of: reducing the output of the fuel cell apparatus that generates power using hydrogen from the hydrogen reservoir device upon the decrease in the amount of hydrogen in the hydrogen reservoir device; reducing the output of the fuel cell apparatus upon an increase in an amount of heat stored in a heat storage device that stores exhaust heat from the fuel cell apparatus; and reducing the output of the fuel cell apparatus upon the increase in the air temperature inside or outside the housing of the fuel cell apparatus, in which when the at least two of the steps is all executed, the output of the fuel cell apparatus is reduced by a largest one of amounts of output reduction of the fuel cell apparatus executed in the respective steps.

According to the above, in the fuel cell apparatus control method of the present aspect, the output of the fuel cell apparatus can be properly reduced by taking into consideration not only a decrease in the amount of hydrogen in the hydrogen reservoir device, but also an increase in the amount of heat stored in the heat storage device that stores exhaust heat from the fuel cell apparatus or an increase in the air temperature inside or outside the housing of the fuel cell apparatus, unlike the prior art.

The smaller the amount of hydrogen in the hydrogen reservoir device, the higher the possibility of the fuel cell apparatus running out of hydrogen needed for power generation. Hence, in that case, the output of the fuel cell apparatus needs to be reduced. Also, the fuel cell apparatus has an optimal temperature range as its operation temperature, and if the amount of heat stored in the heat storage device increases to the full storage amount, it is difficult to properly collect exhaust heat from the fuel cell apparatus. Then, there is a high possibility of the operation temperature of the fuel cell apparatus exceeding the optimal temperature range. Also, the higher the air temperature inside or outside of the fuel cell apparatus, the higher the possibility of the operation temperature of the fuel cell apparatus exceeding the optimal temperature range. Hence, in those cases, the output of the fuel cell apparatus needs to be reduced.

Thus, in the fuel cell apparatus control method of the present aspect, the output of the fuel cell apparatus is reduced by the largest one of the amounts of output reduction of the fuel cell apparatus executed in the respective steps described above, so that the possibility of the fuel cell apparatus running out of hydrogen needed for power generation and the possibility of the operation temperature of the fuel cell apparatus exceeding the optimal temperature range can both be lowered, compared to a case where the output of the fuel cell apparatus is controlled without consideration of the relation between the magnitudes of these amounts of output reduction.

According to a seventh aspect of the present disclosure, in the fuel cell apparatus control method according to the sixth aspect, the at least two of the steps may be the step of reducing the output of the fuel cell apparatus that generates power using hydrogen from the hydrogen reservoir device upon the decrease in an amount of hydrogen in the hydrogen reservoir device and the step of reducing the output of the fuel cell apparatus upon the increase in an amount of heat stored in the heat storage device that stores exhaust heat from the fuel cell apparatus, and when the output reduction of the fuel cell apparatus due to the decrease in the amount of hydrogen in the hydrogen reservoir device and the output reduction of the fuel cell apparatus due to the increase in the amount of heat stored in the heat storage device are both executed, the output of the fuel cell apparatus may be reduced by a larger one of an amount of the output reduction of the fuel cell apparatus due to the decrease in the amount of hydrogen in the hydrogen reservoir device and an amount of the output reduction of the fuel cell apparatus due to the increase in the amount of heat stored in the heat storage device.

The smaller the amount of hydrogen in the hydrogen reservoir device, the higher the possibility of the fuel cell apparatus running out of hydrogen needed for power generation. Hence, in that case, the output of the fuel cell apparatus needs to be reduced. Also, the fuel cell apparatus has an optimal temperature range as its operation temperature, and if the amount of heat stored in the heat storage device increases to the full storage amount, it is difficult to properly collect exhaust heat from the fuel cell apparatus. Then, there is a high possibility of the operation temperature of the fuel cell apparatus exceeding the optimal temperature range. **In** that case, the output of the fuel cell apparatus needs to be reduced.

Thus, in the fuel cell apparatus control method of the present aspect, the output of the fuel cell apparatus is reduced by the larger one of the amounts of output reduction of the fuel cell apparatus executed in the two steps described above, so that the possibility of the fuel cell apparatus running out of hydrogen needed for power generation and the possibility of the operation temperature of the fuel cell apparatus exceeding the optimal temperature range can both be lowered, compared to a case where the output of the fuel cell apparatus is controlled without consideration of the relation between the magnitudes of these amounts of output reduction.

According to an eighth aspect of the present disclosure, in the fuel cell apparatus control method according to the sixth aspect, the at least two of the steps may be the step of reducing the output of the fuel cell apparatus that generates power using hydrogen from the hydrogen reservoir device upon the decrease in the amount of hydrogen in the hydrogen reservoir device and the step of reducing the output of the fuel cell apparatus upon the increase in the air temperature inside or outside the housing of the fuel cell apparatus, and when the output reduction of the fuel cell apparatus due to the decrease in the amount of hydrogen in the hydrogen reservoir device and the output reduction of the fuel cell apparatus due to the increase in the air temperature inside or outside the housing of the fuel cell apparatus are both executed, the output of the fuel cell apparatus may be reduced by a larger one of an amount of the output reduction of the fuel cell apparatus due to the decrease in the amount of hydrogen in the hydrogen reservoir device and an amount of the output reduction of the fuel cell apparatus due to the increase in the air temperature inside or outside the housing of the fuel cell apparatus.

The smaller the amount of hydrogen in the hydrogen reservoir device, the higher the possibility of the fuel cell apparatus running out of hydrogen needed for power generation. Hence, in that case, the output of the fuel cell apparatus needs to be reduced. Also, the fuel cell apparatus has an optimal temperature range as its operation temperature, and the higher the air temperature inside or outside the housing of the fuel cell apparatus, the higher the possibility of the operation temperature of the fuel cell apparatus exceeding the optimal temperature range. Hence, in that case, the output of the fuel cell apparatus needs to be reduced.

Thus, in the fuel cell apparatus control method of the present aspect, the output of the fuel cell apparatus is reduced by the larger one of the amounts of output reduction of the fuel cell apparatus executed in the two steps described above, so that the possibility of the fuel cell apparatus running out of hydrogen needed for power generation and the possibility of the operation temperature of the fuel cell apparatus exceeding the optimal temperature range can both be lowered, compared to a case where the output of the fuel cell apparatus is controlled without consideration of the relation between the magnitudes of these amounts of output reduction.

According to a ninth aspect of the present disclosure, in the fuel cell apparatus control method according to the sixth aspect, the at least two of the steps may be the step of reducing the output of the fuel cell apparatus upon the increase in the amount of heat stored in the heat storage device that stores exhaust heat from the fuel cell apparatus and the step of reducing the output of the fuel cell apparatus upon the increase in the air temperature inside or outside the housing of the fuel cell apparatus, when the output reduction of the fuel cell apparatus due to the increase in the amount of heat stored in the heat storage device and the output reduction of the fuel cell apparatus due to the increase in the air temperature inside or outside the housing of the fuel cell apparatus are both executed, the output of the fuel cell apparatus may be reduced by a larger one of an amount of the output reduction of the fuel cell apparatus due to the increase in the amount of heat stored in the heat storage device and an amount of the output reduction of the fuel cell apparatus due to the increase in the air temperature inside or outside the housing of the fuel cell apparatus.

The fuel cell apparatus has an optimal temperature range as its operation temperature, and if the amount of heat stored in the heat storage device increases to the full storage amount, it is difficult to properly collect exhaust heat from the fuel cell apparatus. Then, there is a high possibility of the operation temperature of the fuel cell apparatus exceeding the optimal temperature range. Also, the higher the air temperature inside or outside of the fuel cell apparatus, the higher the possibility of the operation temperature of the fuel cell apparatus exceeding the optimal temperature range. Hence, in those cases, the output of the fuel cell apparatus needs to be reduced.

Thus, in the fuel cell apparatus control method of the present aspect, the output of the fuel cell apparatus is reduced by the larger one of the amounts of output reduction of the fuel cell apparatus executed in the two steps described above, so that the possibility of the operation temperature of the fuel cell apparatus exceeding the optimal temperature range can be lowered, compared to a case where the output of the fuel cell apparatus is controlled without consideration of the relation between the magnitudes of these amounts of output reduction.

According to a tenth aspect of the present disclosure, in the fuel cell apparatus control method according to the sixth aspect, the at least two of the steps may be the step of reducing the output of the fuel cell apparatus that generates power using hydrogen from the hydrogen reservoir device upon the decrease in the amount of hydrogen in the hydrogen reservoir device, the step of reducing the output of the fuel cell apparatus upon the increase in the amount of heat stored in the heat storage device that stores exhaust heat from the fuel cell apparatus, and the step of reducing the output of the fuel cell apparatus upon the increase in the air temperature inside or outside the housing of the fuel cell apparatus, and when the output reduction of the fuel cell apparatus due to the decrease in the amount of hydrogen in the hydrogen reservoir device, the output reduction of the fuel cell apparatus due to the increase in the amount of heat stored in the heat storage device, and the output reduction of the fuel cell apparatus due to the increase in the air temperature inside or outside the housing of the fuel cell apparatus are all executed, the output of the fuel cell apparatus may be reduced by a largest one of an amount of the output reduction of the fuel cell apparatus due to a decrease in the amount of hydrogen in the hydrogen reservoir device, an amount of the output reduction of the fuel cell apparatus due to the increase in the amount of heat stored in the heat storage device, and an amount of the output reduction of the fuel cell apparatus due to the increase in the air temperature inside or outside the housing of the fuel cell apparatus.

The smaller the amount of hydrogen in the hydrogen reservoir device, the higher the possibility of the fuel cell apparatus running out of hydrogen needed for power generation. Hence, in that case, the output of the fuel cell apparatus needs to be reduced. Also, the fuel cell apparatus has an optimal temperature range as its operation temperature, and if the amount of heat stored in the heat storage device increases to the full storage amount, it is difficult to properly collect exhaust heat from the fuel cell apparatus. Then, there is a high possibility of the operation temperature of the fuel cell apparatus exceeding the optimal temperature range. Also, the higher the air temperature inside or outside of the fuel cell apparatus, the higher the possibility of the operation temperature of the fuel cell apparatus exceeding the optimal temperature range. Hence, in those cases, the output of the fuel cell apparatus needs to be reduced.

Thus, in the fuel cell apparatus control method of the present aspect, the output of the fuel cell apparatus is reduced by the largest one of the amounts of output reduction of the fuel cell apparatus executed in the three steps described above, so that the possibility of the fuel cell apparatus running out of hydrogen needed for power generation and the possibility of the operation temperature of the fuel cell apparatus exceeding the optimal temperature range can both be lowered, compared to a case where the output of the fuel cell apparatus is controlled without consideration of the relation between the magnitudes of these amounts of output reduction.

According to a 11th aspect of the present disclosure, in the fuel cell apparatus control method according to the second, third, fifth, seventh, eighth, and tenth, if the amount of hydrogen in the hydrogen reservoir device becomes equal to or smaller than a first threshold, information indicating a prompt to replenish the hydrogen reservoir device with hydrogen may be presented as a notification on a display, and if the amount of hydrogen in the hydrogen reservoir device becomes equal to or smaller than a second threshold which is smaller than the first threshold, the output of the fuel cell apparatus may be reduced.

According to the above, in the fuel cell apparatus control method of the present aspect, if the amount of hydrogen in the hydrogen reservoir device becomes equal to or smaller than the first threshold, information indicating a prompt to replenish the hydrogen reservoir device with hydrogen is presented as a notification on the device, so that replenishment of hydrogen that the fuel cell apparatus needs to generate power can be done at appropriate times, compared to a case where such information is not presented as a notification on the display. This lowers the possibility of restricting the output of the fuel cell apparatus.

Also, in the fuel cell apparatus control method of the present aspect, when the amount of hydrogen in the hydrogen reservoir device becomes equal to or smaller than the second threshold which is smaller than the first threshold, the output of the fuel cell apparatus is reduced, so that the possibility of the fuel cell apparatus running out of hydrogen needed for power generation can be lowered, compared to a case where such output reduction is not performed.

According to a 12th aspect of the present disclosure, in the fuel cell apparatus control method according to the second, fourth, and fifth, if the temperature of the heating medium becomes equal to or larger than a third threshold, information indicating a prompt to increase a flow rate of the heating medium may be presented as a notification on a display, and if the temperature of the heating medium becomes equal to or larger than a fourth threshold which is larger than the third threshold, the output of the fuel cell apparatus may be reduced.

The higher the flow rate of the heating medium that collects exhaust heat from the fuel cell apparatus, the more the heating medium collects exhaust heat from the fuel cell apparatus and therefore the easier it is to keep the operation temperature of the fuel cell apparatus within the optimal temperature range.

Thus, in the fuel cell apparatus control method of the present aspect, if the temperature of the heating medium becomes equal to or larger than the third threshold, information indicating a prompt to increase the flow rate of the heating medium is presented as a notification on the display, so that it is easier for the operation temperature of the fuel cell apparatus to be kept within the optimal temperature range, compared to a case where such information is not presented as a notification on the display. This lowers the possibility of restricting the output of the fuel cell apparatus.

Also, in the fuel cell apparatus control method of the present aspect, if the temperature of the heating medium becomes equal to or larger than the fourth threshold which is larger than the third threshold, the output of the fuel cell apparatus is reduced, so that the possibility of the operation temperature of the fuel cell apparatus exceeding the optimal temperature range can be lowered, compared to a case where such output reduction is not performed.

According to a 13th aspect of the present disclosure, in the fuel cell apparatus control method according to the seventh, ninth, and tenth, if the amount of heat stored in the heat storage device becomes equal to or larger than a fifth threshold, information indicating a prompt to use heat in the heat storage device may be presented as a notification on a display, and if the amount of heat stored in the heat storage device becomes equal to or larger than a sixth threshold which is larger than the fifth threshold, the output of the fuel cell apparatus may be reduced.

The more the heat in the heat storage device is promoted to be used, the more room there will be in the heat storage device to store exhaust heat from the fuel cell apparatus and therefore the easier it is to keep the operation temperature of the fuel cell apparatus within the optimal temperature range.

Thus, in the fuel cell apparatus control method of the present aspect, if the amount of heat stored in the heat storage device becomes equal to or larger than the fifth threshold, information indicating a prompt to use heat from the heat storage device is presented as a notification on the display, so that usage of heat in the heat storage device can be promoted at appropriate times to keep the operation temperature of the fuel cell apparatus within the optimal temperature range, compared to a case where such information is not presented as a notification on the display. This lowers the possibility of restricting the output of the fuel cell apparatus.

Also, in the fuel cell apparatus control method of the present aspect, if the amount of heat stored in the heat storage device becomes equal to or larger than the sixth threshold which is larger than the fifth threshold, the output of the fuel cell apparatus is reduced, so that the possibility of the operation temperature of the fuel cell apparatus exceeding the optimal temperature range can be lowered, compared to a case where such output reduction is not performed.

According to a 14th aspect of the present disclosure, in the fuel cell apparatus control method according to the third to fifth and eighth to tenth, if the air temperature inside or outside the housing of the fuel cell apparatus becomes equal to or larger than a seventh threshold, information indicating that the fuel cell apparatus is abnormally hot may be presented as a notification on a display, and if the air temperature inside or outside the housing of the fuel cell apparatus becomes equal to or larger than an eighth threshold which is larger than the seventh threshold, the output of the fuel cell apparatus may be reduced.

According to the above, in the fuel cell apparatus control method of the present aspect, when the air temperature inside or outside the housing of the fuel cell apparatus becomes equal to or larger than the seventh threshold, information indicating that the fuel cell apparatus is abnormally hot is presented as a notification on the display, so that an operation for cooling the fuel cell apparatus can be performed at appropriate times to keep the operation temperature of the fuel cell apparatus within the optimal temperature range, compared to a case where such information is not presented as a notification on the device. This lowers the possibility of restricting the output of the fuel cell apparatus.

Also, in the fuel cell apparatus control method of the present aspect, when the air temperature inside or outside the housing of the fuel cell apparatus becomes equal to or larger than the eighth threshold which is larger than the seventh threshold, the output of the fuel cell apparatus is reduced, so that the possibility of the operation temperature of the fuel cell apparatus exceeding the optimal temperature range can be lowered, compared to a case where such output reduction is not performed.

A control apparatus according to a 15th aspect includes: a communicator that receives at least two of the following pieces of information: information indicating an amount of hydrogen in a hydrogen reservoir device, information indicating a temperature of a heating medium that collects exhaust heat from a fuel cell apparatus that generates power using hydrogen from the hydrogen reservoir device, and information indicating an air temperature inside or outside a housing of the fuel cell apparatus; and a controller that executes at least two of the following controls: control to reduce an output of the fuel cell apparatus upon a decrease in the amount of hydrogen in the hydrogen reservoir device, control to reduce the output of the fuel cell apparatus upon an increase in the temperature of the heating medium, and control to reduce the output of the fuel cell apparatus upon an increase in the air temperature inside or outside the housing of the fuel cell apparatus, in which when the at least two of the controls are all executed, the controller reduces the output of the fuel cell apparatus by a largest one of amounts of output reduction of the fuel cell apparatus executed by the respective controls.

According to this configuration, the control apparatus of the present aspect can properly reduce the output of the fuel cell apparatus by taking into consideration not only a decrease in the amount of hydrogen in the hydrogen reservoir device, but also an increase in the temperature of the heating medium that collects exhaust heat from the fuel cell apparatus or an increase in the air temperature inside or outside the housing of the fuel cell apparatus, unlike the prior art. Note that the details of the advantageous effects offered by the control apparatus of the present aspect can easily be understood from the advantageous effects described earlier and are therefore not described here.

A control apparatus according to a 16th includes: a communicator that receives at least two of the following pieces of information: information indicating an amount of hydrogen in a hydrogen reservoir device, information indicating an amount of heat stored in a heat storage device that stores exhaust heat from a fuel cell apparatus that generates power using hydrogen from the hydrogen reservoir device, and information indicating an air temperature inside or outside a housing of the fuel cell apparatus; and a controller that executes at least two of the following controls: control to reduce an output of the fuel cell apparatus upon a decrease in the amount of hydrogen in the hydrogen reservoir device, control to reduce the output of the fuel cell apparatus upon an increase in the amount of heat stored in the heat storage device, and control to reduce the output of the fuel cell apparatus upon an increase in the air temperature inside or outside the housing of the fuel cell apparatus, in which when the at least two of the controls are all executed, the controller reduces the output of the fuel cell apparatus by a largest one of amounts of output reduction of the fuel cell apparatus executed by the respective controls.

According to this configuration, the control apparatus of the present aspect can properly reduce the output of the fuel cell apparatus by taking into consideration not only a decrease in the amount of hydrogen in the hydrogen reservoir device, but also an increase in the amount of heat stored in the heat storage device that stores exhaust heat from the fuel cell apparatus or an increase in the air temperature inside or outside the housing of the fuel cell apparatus, unlike the prior art. Note that the details of the advantageous effects offered by the control apparatus of the present aspect can easily be understood from the advantageous effects described earlier and are therefore not described here.

A power generation system according to a 17th aspect includes: a fuel cell apparatus and the control apparatus according to the 15th or 16th aspect.

According to this configuration, the power generation system of the present aspect can properly reduce the output of the fuel cell apparatus by taking into consideration not only a decrease in the amount of hydrogen in the hydrogen reservoir device, but also an increase in the temperature of the heating medium that collects exhaust heat from the fuel cell apparatus or an increase in the air temperature inside or outside the housing of the fuel cell apparatus, unlike the prior art. Note that the details of the advantageous effects offered by the power generation system of the present aspect can easily be understood from the advantageous effects described earlier and are therefore not described here.

Also, the power generation system of the present aspect can properly reduce the output of the fuel cell apparatus by taking into consideration not only a decrease in the amount of hydrogen in the hydrogen reservoir device, but also an increase in the amount of heat stored in the heat storage device that stores exhaust heat from the fuel cell apparatus or an increase in the air temperature inside or outside the housing of the fuel cell apparatus, unlike the prior art. Note that the details of the advantageous effects offered by the power generation system of the present aspect can easily be understood from the advantageous effects described earlier and are therefore not described here.

Specific examples of the above-described aspects of the present disclosure are described below with reference to the drawings attached hereto. The specific examples described below illustrate examples of the aspects of the present disclosure described above. Thus, the shapes, numerical values, constituents, the arrangement and positions of the constituents, how the constituents are connected, and the like demonstrated below do not limit the scope of the claims unless they are described in the claims.

Also, of the constituents described below, constituents that are not described in the independent claims, which define the most superordinate concept of the present disclosure, are described as optional constituents. Also, as to constituents denoted by the same reference numeral in the drawings, their descriptions may be omitted. In the drawings, constituents are schematically illustrated in order to facilitate understanding, and their shapes, dimensional ratios, and the like are not necessarily accurately depicted.

Further, as to the operation of the apparatus, the order of steps may be changed, or a publicly known step may be added, as needed.

### (First Embodiment)

### [Apparatus Configuration]

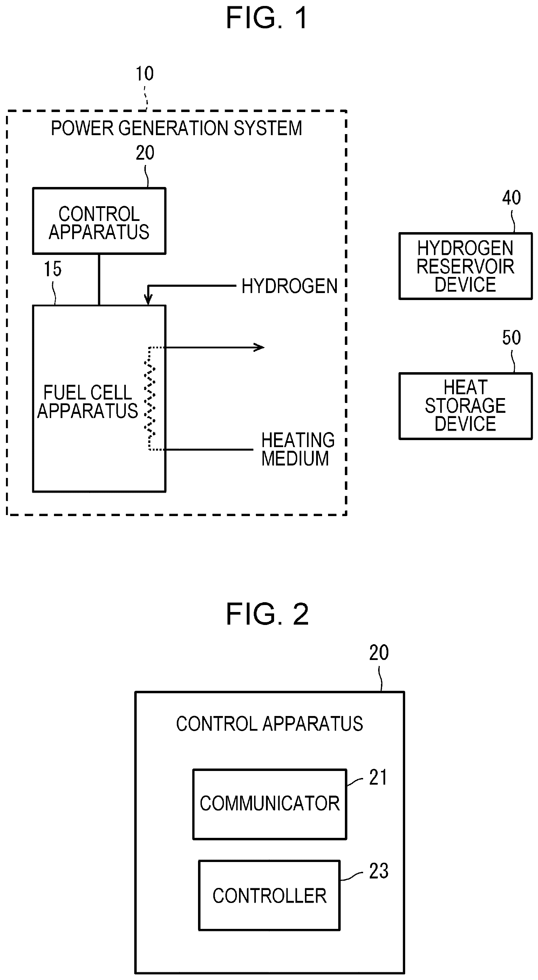

Fig. 1 is a diagram illustrating an example of a power generation system of a first embodiment. Fig. 2 is a diagram illustrating an example of a control apparatus in Fig. 1.

A power generation system 10 of the present embodiment includes, as illustrated in Fig. 1, a fuel cell apparatus 15 and a control apparatus 20.

The fuel cell apparatus 15 includes a power generation unit that generates power using hydrogen from a hydrogen reservoir device 40. Examples of the hydrogen reservoir device 40 include, but are not limited to, a hydrogen tank.

The fuel cell apparatus 15 has an optimal temperature range as its operation temperature. For this reason, a heating medium from a heat storage device 50 circulates, passing through a fuel cell stack in the power generation unit included in the fuel cell apparatus 15. The heating medium thereby collects exhaust heat from the fuel cell apparatus 15, keeping the operation temperature of the fuel cell apparatus 15 at optimal temperatures.

In the present example, the heat storage device 50 is disposed along with the power generation system 10. The heat storage device 50 thus can properly store exhaust heat from the fuel cell apparatus 15. Examples of the heat storage device 50 include, but are not limited to, a hot-water storage tank that stores water as an example of the heating medium. The heating medium may be, for example, an antifreeze liquid. Note that although not illustrated, a sender (e.g., a pump) that sends the heating medium is provided at a flow channel in which the heating medium flows.

Note that the fuel cell apparatus 15 may include a single power generation unit or a plurality of power generation units. **In** the latter case, the power generation system 10 may be, for example, a system that supplies large amounts of power to an electrical grid. More specifically, in the latter case, the power generation system 10 has a power generation unit aggregate formed by a plurality of power generation units including a fuel cell stack, and the fuel cell apparatus 15 corresponds to each of groups divided from the power generation unit aggregate. A detailed configuration of the power generation system 10 will be described in a seventh embodiment.

As illustrated in Fig. 2, the control apparatus 20 includes a communicator 21 and a controller 23.

The communicator 21 is a receiver that receives information indicating at least two of the following pieces of information: information indicating the amount of hydrogen in the hydrogen reservoir device 40, information indicating the temperature of the heating medium that collects exhaust heat from the fuel cell apparatus 15 that generates power using hydrogen from the hydrogen reservoir device 40, and information indicating the air temperature inside or outside the housing of the fuel cell apparatus 15. For example, the communicator 21 may receive at least two of the following pieces of information every predetermined period of time via a communication network: the information indicating the amount of hydrogen in the hydrogen reservoir device 40, the information indicating the temperature of the heating medium, and the information indicating the air temperature inside or outside the housing of the fuel cell apparatus 15. These pieces of information may be presented as a notification on a given display of the power generation system 10. Examples of the "display" include, but are not limited to, an information terminal used by a consumer receiving a service that supplies the power generated by the power generation system 10, a display device used by a maintenance company, and the like. The amount of hydrogen in the hydrogen reservoir device 40 may be measured with, for example, any given sensor. Details of this sensor will be described in a third embodiment. The temperature of the heating medium may be measured with any given sensor. Details of this sensor will be described in a fourth embodiment. The air temperature inside or outside the housing of the fuel cell apparatus 15 may be measured with any given sensor. Details of this sensor will be described in a sixth embodiment.

The controller 23 executes at least two of the following controls: control to reduce the output of the fuel cell apparatus 15 upon a decrease in the amount of hydrogen in the hydrogen reservoir device 40, control to reduce the output of the fuel cell apparatus 15 upon an increase in the temperature of the heating medium, and control to reduce the output of the fuel cell apparatus 15 upon an increase in the air temperature inside or outside the housing of the fuel cell apparatus 15. Also, when the controller 23 executes all of the at least two of controls, the controller 23 reduces the output of the fuel cell apparatus 15 by the largest one of the amounts of output reduction of the fuel cell apparatus 15 executed by the respective controls. Note that to "reduce the output of the fuel cell apparatus 15" includes to reduce the upper limit value of the output of the fuel cell apparatus 15. **In** other words, to "reduce the output of the fuel cell apparatus 15" includes to restrict the output of the fuel cell apparatus 15.

If the fuel cell apparatus 15 has a plurality of power generation units including a fuel cell stack, the output reduction of the fuel cell apparatus 15 may be achieved by stopping the operation of some of the plurality of power generation units or by reducing the output of some or all of the plurality of power generation units. Note that the former case can keep the output of the power generation unit constant at a rated output and is therefore advantageous compared to the latter case in terms of the power generation efficiency and longer life of the power generation units.

If the fuel cell apparatus 15 is formed by a single power generation unit, the output reduction of the fuel cell apparatus 15 is achieved by reducing the output of the single power generation unit.

Note that to "reduce the output of the fuel cell apparatus 15" above includes to stop the operation of the fuel cell apparatus 15, by which the output of the fuel cell apparatus 15 becomes zero.

There is no limitation as to the controller 23 as long as it has a control function, and the controller 23 includes a computation unit (not illustrated) and a storage unit that stores a control program. The computation unit reads and executes the control program stored in the storage unit, and the controller 23 thereby performs predetermined control. A microprocessor is an example of the computation unit. A memory is an example of the storage unit. Note that the control apparatus 20 including the controller 23 may directly control the operation of the fuel cell apparatus 15, including the output of the power generation unit therein. If the power generation unit is provided therein with a control apparatus (not illustrated) that controls the operation, including the output, of the power generation unit itself, the control apparatus 20 may indirectly control, via this control apparatus, the operation, including the output, of the power generation unit in the fuel cell apparatus 15.

The configuration of the power generation system 10 described above is merely exemplary and is not limited to this example. For example, although the hydrogen reservoir device 40 and the heat storage device 50 are provided outside of the power generation system 10 in the example illustrated in Fig. 1, the hydrogen reservoir device 40 and the heat storage device 50 may be provided inside of the power generation system 10. Also, without the provision of the heat storage device 50, the heating medium that collected exhaust heat from the fuel cell apparatus 15 may be discarded to the outside (e.g., a sewer) or cooled with a heat radiator which is not illustrated.

### [Operation]

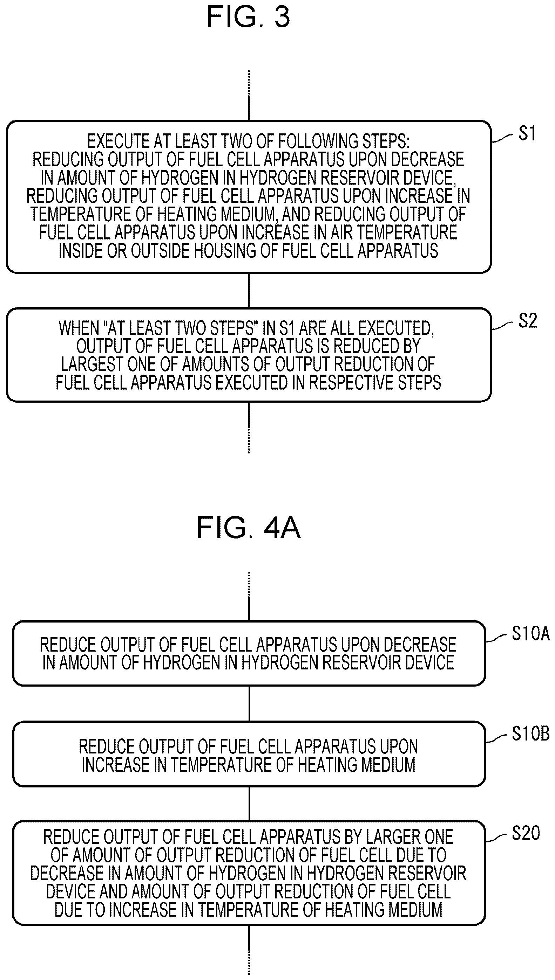

Fig. 3 is a flowchart illustrating an example of the operation of the control apparatus in the power generation system (a fuel cell apparatus control method) in the first embodiment. The following operation may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S1, at least two of the following steps are executed: a step of reducing the output of the fuel cell apparatus 15 upon a decrease in the amount of hydrogen in the hydrogen reservoir device 40, a step of reducing the output of the fuel cell apparatus 15 upon an increase in the temperature of the heating medium collecting exhaust heat from the fuel cell apparatus 15, and a step of reducing the output of the fuel cell apparatus 15 upon an increase in the air temperature inside or outside the housing of the fuel cell apparatus 15.

**In** Step S2, when the "at least two of the steps" in Step S1 are all executed, the output of the fuel cell apparatus 15 is reduced by the largest one of the amounts of output reduction of the fuel cell apparatus 15 executed in the respective steps.

According to the present embodiment described above, unlike the prior art, the output of the fuel cell apparatus 15 can be properly reduced by taking into consideration not only a decrease in the amount of hydrogen in the hydrogen reservoir device 40, but also an increase in the temperature of the heating medium collecting exhaust heat from the fuel cell apparatus 15 or an increase in the air temperature inside or outside the housing of the fuel cell apparatus 15.

The smaller the amount of hydrogen in the hydrogen reservoir device 40, the higher the possibility of the fuel cell apparatus 15 running out of hydrogen needed for power generation. Hence, in that case, the output of the fuel cell apparatus 15 needs to be reduced. Also, the fuel cell apparatus 15 has an optimal temperature range as its operation temperature, and the higher the temperature of the heating medium, the more difficult it is for the heating medium to collect exhaust heat from the fuel cell apparatus 15 properly. Then, there is a higher possibility of the operation temperature of the fuel cell apparatus 15 exceeding the optimal temperature range. Also, the higher the air temperature inside or outside the housing of the fuel cell apparatus 15, the higher the possibility of the operation temperature of the fuel cell apparatus 15 exceeding the optimal temperature range. Hence, in those cases, the output of the fuel cell apparatus 15 needs to be reduced.

Thus, according to the present embodiment, the output of the fuel cell apparatus 15 is reduced by the largest one of the amounts of output reduction of the fuel cell apparatus 15 executed in the respective steps described above, so that the possibility of the fuel cell apparatus 15 running out of hydrogen needed for power generation and the possibility of the operation temperature of the fuel cell apparatus 15 exceeding the optimal temperature range can both be lowered, compared to a case where the output of the fuel cell apparatus 15 is controlled without consideration of the relation between the magnitudes of these amounts of output reduction.

### (First Example)

A method for controlling the fuel cell apparatus 15 of the present example is the same as that in the first embodiment, except for the control performed by the controller 23 described below.

Fig. 4A is a flowchart illustrating an example of the operation of the control apparatus in the power generation system (a fuel cell apparatus control method) in the first example of the first embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S10A, the output of the fuel cell apparatus 15 is reduced upon a decrease in the amount of hydrogen in the hydrogen reservoir device 40.

Also, while the power generation system 10 is generating power, in Step S10B, the output of the fuel cell apparatus 15 is reduced upon an increase in the temperature of the heating medium collecting exhaust heat from the fuel cell apparatus 15.

Then, in Step S20, when the output reduction of the fuel cell apparatus 15 due to a decrease in the amount of hydrogen in the hydrogen reservoir device 40 (the operation in Step S10A) and the output reduction of the fuel cell apparatus 15 due to an increase in the temperature of the heating medium (the operation in Step S10B) are both executed, the output of the fuel cell apparatus 15 is reduced by the larger one of the amount of output reduction of the fuel cell apparatus 15 due to a decrease in the amount of hydrogen in the hydrogen reservoir device 40 and the amount of output reduction of the fuel cell apparatus 15 due to an increase in the temperature of the heating medium.

Note that the operation of the control apparatus 20 described above is merely exemplary and is not limited to the present example. For example, the timing of the operation in Step S10A and the timing of the operation in Step S10B may be the same or may be reversed in order.

According to the present example described above, the output of the fuel cell apparatus 15 can be reduced properly by taking into consideration not only a decrease in the amount of hydrogen in the hydrogen reservoir device 40, but also an increase in the temperature of the heating medium collecting exhaust heat from the fuel cell apparatus 15, unlike the prior art.

The smaller the amount of hydrogen in the hydrogen reservoir device 40, the higher the possibility of the fuel cell apparatus 15 running out of hydrogen needed for power generation. Hence, in that case, the output of the fuel cell apparatus 15 needs to be reduced. Also, the fuel cell apparatus 15 has an optimal temperature range as its operation temperature, and the higher the temperature of the heating medium, the more difficult it is for the heating medium to collect exhaust heat from the fuel cell apparatus 15 properly. Then, there is a higher possibility of the operation temperature of the fuel cell apparatus 15 exceeding the optimal temperature range. Hence, in that case, the output of the fuel cell apparatus 15 needs to be reduced.

Thus, according to the present example, the output of the fuel cell apparatus 15 is reduced by the larger one of the amounts of output reduction of the fuel cell apparatus 15 in the two steps described above, so that the possibility of the fuel cell apparatus 15 running out of hydrogen needed for power generation and the possibility of the operation temperature of the fuel cell apparatus 15 exceeding the optimal temperature range can both be lowered, compared to a case where the output of the fuel cell apparatus 15 is controlled without consideration of the relation between the magnitudes of these amounts of output reduction.

The method of controlling the fuel cell apparatus 15, the control apparatus 20, and the power generation system 10 of the present example may be the same as those in the first embodiment except for the characteristics described above.

### (Second Example)

A method for controlling the fuel cell apparatus 15 of the present example is the same as that in the first embodiment except for the control performed by the controller 23 described below.

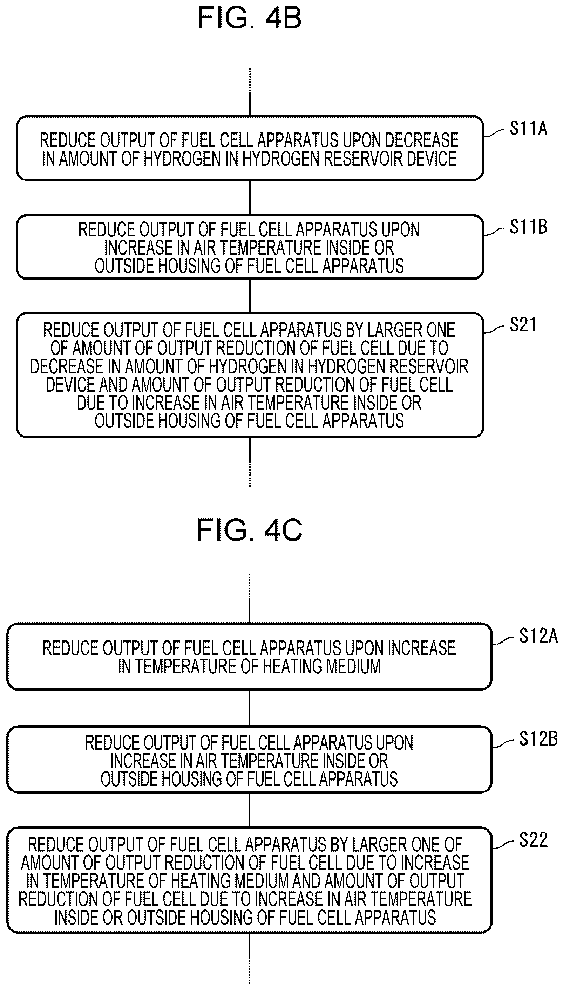

Fig. 4B is a flowchart illustrating an example of the operation of the control apparatus in the power generation system (a fuel cell apparatus control method) in a second example of the first embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S11A, the output of the fuel cell apparatus 15 is reduced upon a decrease in the amount of hydrogen in the hydrogen reservoir device 40.

Also, while the power generation system 10 is generating power, in Step S11B, the output of the fuel cell apparatus 15 is reduced upon an increase in the air temperature inside or outside the housing of the fuel cell apparatus 15.

Then, in Step S21, when the output reduction of the fuel cell apparatus 15 due to a decrease in the amount of hydrogen in the hydrogen reservoir device 40 (the operation in Step S11A) and the output reduction of the fuel cell apparatus 15 due to an increase in the air temperature inside or outside the housing of the fuel cell apparatus 15 (the operation in Step S11B) are both executed, the output of the fuel cell apparatus 15 is reduced by the larger one of the amount of the output reduction of the fuel cell apparatus 15 due to a decrease in the amount of hydrogen in the hydrogen reservoir device 40 and the amount of the output reduction of the fuel cell apparatus 15 due to an increase in the air temperature inside or outside the housing of the fuel cell apparatus 15.

Note that the operation of the control apparatus 20 described above is merely exemplary and is not limited to the present example. For example, the timing of the operation in Step S11A and the timing of the operation in Step S11B may be the same or may be reversed in order.

The smaller the amount of hydrogen in the hydrogen reservoir device 40, the higher the possibility of the fuel cell apparatus 15 running out of hydrogen needed for power generation. Hence, in that case, the output of the fuel cell apparatus 15 needs to be reduced. Also, the fuel cell apparatus 15 has an optimal temperature range as its operation temperature, and the higher the air temperature inside or outside the housing of the fuel cell apparatus 15, the higher the possibility of the operation temperature of the fuel cell apparatus 15 exceeding the optimal temperature range. Hence, in that case, the output of the fuel cell apparatus 15 needs to be reduced.

Thus, according to the present example, the output of the fuel cell apparatus 15 is reduced by the larger one of the amounts of output reduction of the fuel cell apparatus 15 in the two steps described above, so that the possibility of the fuel cell apparatus 15 running out of hydrogen needed for power generation and the possibility of the operation temperature of the fuel cell apparatus 15 exceeding the optimal temperature range can both be lowered, compared to a case where the output of the fuel cell apparatus 15 is controlled without consideration of the relation between the magnitudes of these amounts of output reduction.

The method of controlling the fuel cell apparatus 15, the control apparatus 20, and the power generation system 10 of the present example may be the same as those in the first embodiment or the first example of the first embodiment, except for the characteristics described above.

### (Third Example)

A method for controlling the fuel cell apparatus 15 of the present example is the same as that in the first embodiment except for the control performed by the controller 23 described below.

Fig. 4C is a flowchart illustrating an example of the operation of the control apparatus in the power generation system (a fuel cell apparatus control method) in a third example of the first embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S12A, the output of the fuel cell apparatus 15 is reduced upon an increase in the temperature of the heating medium collecting exhaust heat from the fuel cell apparatus 15.

Also, while the power generation system 10 is generating power, in Step S12B, the output of the fuel cell apparatus 15 is reduced upon an increase in the air temperature inside or outside the housing of the fuel cell apparatus 15.

Then, in Step S22, when the output reduction of the fuel cell apparatus 15 due to an increase in the temperature of the heating medium (the operation in Step S12A) and the output reduction of the fuel cell apparatus 15 due to an increase in the air temperature inside or outside the housing of the fuel cell apparatus 15 (the operation in Step S12B), are both executed, the output of the fuel cell apparatus 15 is reduced by the larger one of the amount of the output reduction of the fuel cell apparatus 15 due to an increase in the temperature of the heating medium and the amount of the output reduction of the fuel cell apparatus 15 due to an increase in the air temperature inside or outside the housing of the fuel cell apparatus 15.

Note that the operation of the control apparatus 20 described above is merely exemplary and is not limited to the present example. For example, the timing of the operation in Step S12A and the timing of the operation in Step S12B may be the same or may be reversed in order.

The fuel cell apparatus 15 has an optimal temperature range as its operation temperature, and the higher the temperature of the heating medium, the more difficult it is for the heating medium to collect exhaust heat from the fuel cell apparatus 15 properly. Then, there is a higher possibility of the operation temperature of the fuel cell apparatus 15 exceeding the optimal temperature range. Also, the higher the air temperature inside or outside the housing of the fuel cell apparatus 15, the higher the possibility of the operation temperature of the fuel cell apparatus 15 exceeding the optimal temperature range. Hence, in those cases, the output of the fuel cell apparatus 15 needs to be reduced.

Thus, according to the present example, the output of the fuel cell apparatus 15 is reduced by the larger one of the amounts of output reduction of the fuel cell apparatus 15 in the two steps described above, so that the possibility of the operation temperature of the fuel cell apparatus 15 exceeding the optimal temperature range can be lowered, compared to a case where the output of the fuel cell apparatus 15 is controlled without consideration of the relation between the magnitudes of these amounts of output reduction.

The method of controlling the fuel cell apparatus 15, the control apparatus 20, and the power generation system 10 of the present example may be the same as those in any of the first embodiment and the first and second examples of the first embodiment, except for the characteristics described above.

### (Fourth Example)

A method for controlling the fuel cell apparatus 15 of the present example is the same as that in the first embodiment, except for the control performed by the controller 23 described below.

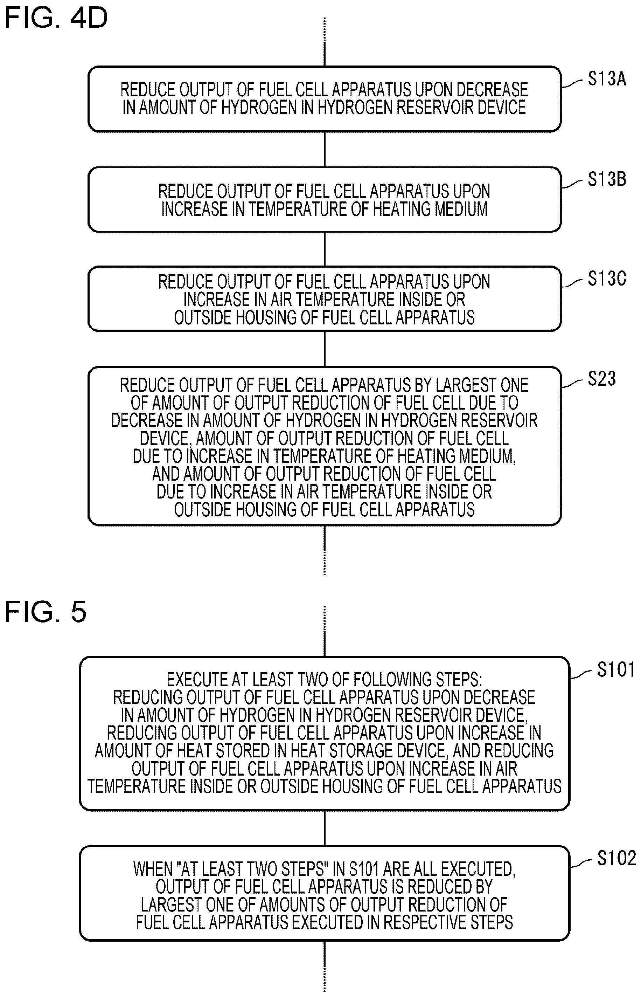

Fig. 4D is a flowchart illustrating an example of the operation of the control apparatus in the power generation system (a fuel cell apparatus control method) in a fourth example of the first embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S13A, the output of the fuel cell apparatus 15 is reduced upon a decrease in the amount of hydrogen in the hydrogen reservoir device 40.

Also, while the power generation system 10 is generating power, in Step S13B, the output of the fuel cell apparatus 15 is reduced upon an increase in the temperature of the heating medium collecting exhaust heat from the fuel cell apparatus 15.

Also, while the power generation system 10 is generating power, in Step S13C, the output of the fuel cell apparatus 15 is reduced upon an increase in the air temperature inside or outside the housing of the fuel cell apparatus 15.

Then, in Step S23, when the output reduction of the fuel cell apparatus 15 due to a decrease in the amount of hydrogen in the hydrogen reservoir device 40 (the operation in Step S13A), the output reduction of the fuel cell apparatus 15 due to an increase in the temperature of the heating medium (the operation in Step S13B), and the output reduction of the fuel cell apparatus 15 due to an increase in the air temperature inside or outside the housing of the fuel cell apparatus 15 (the operation in Step S13C) are all executed, the output of the fuel cell apparatus 15 is reduced by the largest one of the amount of the output reduction of the fuel cell apparatus 15 due to a decrease in the amount of hydrogen in the hydrogen reservoir device 40, the amount of the output reduction of the fuel cell apparatus 15 due to an increase in the temperature of the heating medium, and the amount of the output reduction of the fuel cell apparatus 15 due to an increase in the air temperature inside or outside the housing of the fuel cell apparatus 15.

Note that the operation of the control apparatus 20 described above is merely exemplary and is not limited to the present example. For example, the timing of the operation in Step S13A, the timing of the operation in Step S13B, and the timing of the operation in Step S13C may be the same, or these operations may be performed in an order different from the order in Fig. 4D.

The smaller the amount of hydrogen in the hydrogen reservoir device 40, the higher the possibility of the fuel cell apparatus 15 running out of hydrogen needed for power generation. Hence, in that case, the output of the fuel cell apparatus 15 needs to be reduced. Also, the fuel cell apparatus 15 has an optimal temperature range as its operation temperature, and the higher the temperature of the heating medium, the more difficult it is for the heating medium to collect exhaust heat from the fuel cell apparatus 15 properly. Then, there is a higher possibility of the operation temperature of the fuel cell apparatus 15 exceeding the optimal temperature range. Also, the higher the air temperature inside or outside the housing of the fuel cell apparatus 15, the higher the possibility of the operation temperature of the fuel cell apparatus 15 exceeding the optimal temperature range. Hence, in those cases, the output of the fuel cell apparatus 15 needs to be reduced.

Thus, according to the present example, the output of the fuel cell apparatus 15 is reduced by the largest one of the amounts of output reduction of the fuel cell apparatus 15 executed in the three steps described above, so that the possibility of the fuel cell apparatus 15 running out of hydrogen needed for power generation and the possibility of the operation temperature of the fuel cell apparatus 15 exceeding the optimal temperature range can both be lowered, compared to a case where the output of the fuel cell apparatus 15 is controlled without consideration of the relation between the magnitudes of these amounts of output reduction.

The method of controlling the fuel cell apparatus 15, the control apparatus 20, and the power generation system 10 of the present example may be the same as those in any of the first embodiment and the first to third examples of the first embodiment, except for the characteristics described above.

### (Second Embodiment)

The power generation system 10 of the present embodiment is the same as the power generation system 10 of the first embodiment except for the configuration of and control performed by the control apparatus 20 described below.

The communicator 21 is a receiver that receives at least two of the following pieces of information: information indicating the amount of hydrogen in the hydrogen reservoir device 40, information indicating the amount of heat stored in the heat storage device 50 that stores exhaust heat from the fuel cell apparatus 15 that generates power using the hydrogen from the hydrogen reservoir device 40, and information indicating the air temperature inside or outside the housing of the fuel cell apparatus 15. For example, the communicator 21 may receive at least two of the following pieces of information every predetermined period of time via a communication network: the information indicating the amount of hydrogen in the hydrogen reservoir device 40, the information indicating the amount of heat stored in the heat storage device 50, and the information indicating the air temperature inside or outside the housing of the fuel cell apparatus 15. These pieces of information may be presented as a notification on a given display of the power generation system 10. Examples of the "display" include, but are not limited to, an information terminal used by a consumer receiving a service that supplies the power generated by the power generation system 10, a display device used by a maintenance company, and the like. The amount of hydrogen in the hydrogen reservoir device 40 may be measured with, for example, any given sensor. Details of this sensor will be described in the third embodiment. The amount of heat stored in the heat storage device 50 may be measured with, for example, any given sensor or the like. Details of this sensor will be described in a fifth embodiment. The air temperature inside or outside the housing of the fuel cell apparatus 15 may be measured with any given sensor. Details of this sensor will be described in the sixth embodiment.

The controller 23 executes at least two of the following controls: control to reduce the output of the fuel cell apparatus 15 upon a decrease in the amount of hydrogen in the hydrogen reservoir device 40, control to reduce the output of the fuel cell apparatus 15 upon an increase in the amount of heat stored in the heat storage device 50, and control to reduce the output of the fuel cell apparatus 15 upon an increase in the air temperature inside or outside the housing of the fuel cell apparatus 15. Also, when executing all of the at least two of controls, the controller 23 reduces the output of the fuel cell apparatus 15 by the largest one of the amounts of output reduction of the fuel cell apparatus 15 executed by the respective controls. Note that to "reduce the output of the fuel cell apparatus 15" means the same as the first embodiment and is therefore not described in detail here. Also, there is no limitation as to the controller 23 as long as it has a control function, and the controller 23 includes a computation unit (not illustrated) and a storage unit that stores a control program. The configuration of the controller 23 is the same as that in the first embodiment and is therefore not described in detail here.

Fig. 5 is a flowchart illustrating an example of the operation of the control apparatus in the power generation system (a fuel cell apparatus control method) in a second embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S101, at least two of the following steps are executed: a step of reducing the output of the fuel cell apparatus 15 upon a decrease in the amount of hydrogen in the hydrogen reservoir device 40, a step of reducing the output of the fuel cell apparatus 15 upon an increase in the amount of heat stored in the heat storage device 50, and a step of reducing the output of the fuel cell apparatus 15 upon an increase in the air temperature inside or outside the housing of the fuel cell apparatus 15.

Then, in Step S102, when the "at least two of the steps" in Step S101 are all executed, the output of the fuel cell apparatus 15 is reduced by the largest one of the amounts of output reduction of the fuel cell apparatus 15 executed in the respective steps.

According to the present embodiment described above, unlike the prior art, the output of the fuel cell apparatus 15 can be reduced properly by taking into consideration not only a decrease in the amount of hydrogen in the hydrogen reservoir device 40, but also an increase in the amount of heat stored in the heat storage device 50 that stores exhaust heat from the fuel cell apparatus 15 or an increase in the air temperature inside or outside the housing of the fuel cell apparatus 15.

The smaller the amount of hydrogen in the hydrogen reservoir device 40, the higher the possibility of the fuel cell apparatus 15 running out of hydrogen needed for power generation. Hence, in that case, the output of the fuel cell apparatus 15 needs to be reduced. Also, the fuel cell apparatus 15 has an optimal temperature range as its operation temperature, and when the amount of heat stored in the heat storage device 50 increases to the full storage amount, it is difficult for the exhaust heat from the fuel cell apparatus 15 to be properly collected. Then, there is a higher possibility of the operation temperature of the fuel cell apparatus 15 exceeding the optimal temperature range. Also, the higher the air temperature inside or outside the housing of the fuel cell apparatus 15, the higher the possibility of the operation temperature of the fuel cell apparatus 15 exceeding the optimal temperature range. Hence, in those cases, the output of the fuel cell apparatus 15 needs to be reduced.

Thus, according to the present embodiment, the output of the fuel cell apparatus 15 is reduced by the largest one of the amounts of output reduction of the fuel cell apparatus 15 executed in the respective steps, so that the possibility of the fuel cell apparatus 15 running out of hydrogen needed for power generation and the possibility of the operation temperature of the fuel cell apparatus 15 exceeding the optimal temperature range can both be lowered, compared to a case where the output of the fuel cell apparatus 15 is controlled without consideration of the relation between the magnitudes of these amounts of output reduction.

The method for controlling the fuel cell apparatus 15, the control apparatus 20, and the power generation system 10 of the present embodiment may be the same as those in the first embodiment and the first to fourth examples of the first embodiment, except for the characteristics described above.

### (First Example)

A method for controlling the fuel cell apparatus 15 of the present example is the same as that in the second embodiment, except for the control performed by the controller 23 described below.

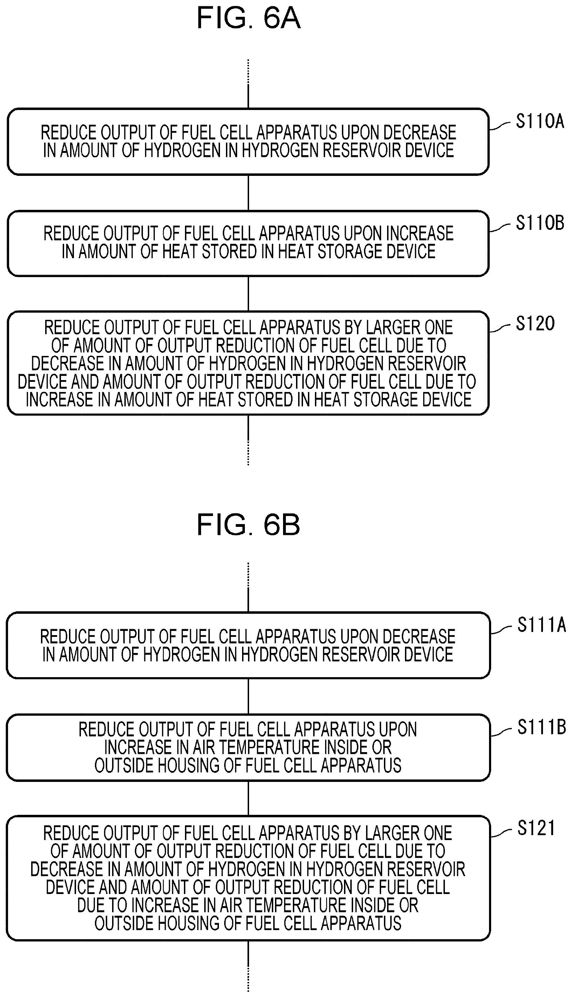

Fig. 6A is a flowchart illustrating an example of the operation of the control apparatus in the power generation system (a fuel cell apparatus control method) in a first example of the second embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S110A, the output of the fuel cell apparatus 15 is reduced upon a decrease in the amount of hydrogen in the hydrogen reservoir device 40.

Also, while the power generation system 10 is generating power, in Step S110B, the output of the fuel cell apparatus 15 is reduced upon an increase in the amount of heat stored in the heat storage device 50 that stores exhaust heat from the fuel cell apparatus 15.

Then, in Step S120, when the output reduction of the fuel cell apparatus 15 due to a decrease in the amount of hydrogen in the hydrogen reservoir device 40 (the operation in Step S110A) and the output reduction of the fuel cell apparatus 15 due to an increase in the amount of heat stored in the heat storage device 50 (the operation in Step S110B) are both executed, the output of the fuel cell apparatus 15 is reduced by the larger one of the amount of the output reduction of the fuel cell apparatus 15 due to a decrease in the amount of hydrogen in the hydrogen reservoir device 40 and the amount of the output reduction of the fuel cell apparatus 15 due to an increase in the amount of heat stored in the heat storage device 50.

Note that the operation of the control apparatus 20 described above is merely exemplary and is not limited to the present example. For example, the timing of the operation in Step S110A and the timing of the operation in Step S110B may be the same or may be reversed in order.

According to the present example described above, unlike the prior art, the output of the fuel cell apparatus 15 can be reduced properly by taking into consideration not only a decrease in the amount of hydrogen in the hydrogen reservoir device 40, but also an increase in the amount of heat stored in the heat storage device 50 that stores exhaust heat from the fuel cell apparatus 15.

The smaller the amount of hydrogen in the hydrogen reservoir device 40, the higher the possibility of the fuel cell apparatus 15 running out of hydrogen needed for power generation. Hence, in that case, the output of the fuel cell apparatus 15 needs to be reduced. Also, the fuel cell apparatus 15 has an optimal temperature range as its operation temperature, and if the amount of heat stored in the heat storage device 50 increases to the full storage amount, it is difficult for the exhaust heat from the fuel cell apparatus 15 to be properly collected. Then, there is a higher possibility of the operation temperature of the fuel cell apparatus 15 exceeding the optimal temperature range. Hence, in that case, the output of the fuel cell apparatus 15 needs to be reduced.

Thus, according to the present example, the output of the fuel cell apparatus 15 is reduced by the largest one of the amount of output reduction of the fuel cell apparatus 15 due to a decrease in the amount of hydrogen in the hydrogen reservoir device 40 and the amount of output reduction of the fuel cell apparatus 15 due to an increase in the amount of heat stored in the heat storage device 50, so that the possibility of the fuel cell apparatus 15 running out of hydrogen needed for power generation and the possibility of the operation temperature of the fuel cell apparatus 15 exceeding the optimal temperature range can both be lowered, compared to a case where the output of the fuel cell apparatus 15 is controlled without consideration of the relation between the magnitudes of these amounts of output reduction.

The method of controlling the fuel cell apparatus 15, the control apparatus 20, and the power generation system 10 of the present example may be the same as those in any of the first embodiment, the first to fourth examples of the first embodiment, and the second embodiment, except for the characteristics described above.

### (Second Example)

A method for controlling the fuel cell apparatus 15 of the present example is the same as that in the second embodiment, except for the control performed by the controller 23 described below.

Fig. 6B is a flowchart illustrating an example of the operation of the control apparatus in the power generation system (a fuel cell apparatus control method) in a second example of the second embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S111A, the output of the fuel cell apparatus 15 is reduced upon a decrease in the amount of hydrogen in the hydrogen reservoir device 40.

Also, while the power generation system 10 is generating power, in Step S111B, the output of the fuel cell apparatus 15 is reduced upon an increase in the air temperature inside or outside the housing of the fuel cell apparatus 15.

Then, in Step S121, when the output reduction of the fuel cell apparatus 15 due to a decrease in the amount of hydrogen in the hydrogen reservoir device 40 (the operation in Step S111A) and the output reduction of the fuel cell apparatus 15 due to an increase in the air temperature inside or outside the housing of the fuel cell apparatus 15 (the operation in Step S111B) are both executed, the output of the fuel cell apparatus 15 is reduced by the larger one of the amount of the output reduction of the fuel cell apparatus 15 due to a decrease in the amount of hydrogen in the hydrogen reservoir device 40 and the amount of the output reduction of the fuel cell apparatus 15 due to an increase in the air temperature inside or outside the housing of the fuel cell apparatus 15.

Note that the operation of the control apparatus 20 described above is merely exemplary and is not limited to the present example. For example, the timing of the operation in Step S111A and the timing of the operation in Step S111B may be the same or may be reversed in order.

The smaller the amount of hydrogen in the hydrogen reservoir device 40, the higher the possibility of the fuel cell apparatus 15 running out of hydrogen needed for power generation. Hence, in that case, the output of the fuel cell apparatus 15 needs to be reduced. Also, the fuel cell apparatus 15 has an optimal temperature range as its operation temperature, and the higher the air temperature inside or outside the housing of the fuel cell apparatus 15, the higher the possibility of the operation temperature of the fuel cell apparatus 15 exceeding the optimal temperature range. Hence, in that case, the output of the fuel cell apparatus 15 needs to be reduced.

Thus, according to the present example, the output of the fuel cell apparatus 15 is reduced by the larger one of the amounts of output reduction of the fuel cell apparatus 15 executed in the two steps described above, so that the possibility of the fuel cell apparatus 15 running out of hydrogen needed for power generation and the possibility of the operation temperature of the fuel cell apparatus 15 exceeding the optimal temperature range can both be lowered, compared to a case where the output of the fuel cell apparatus 15 is controlled without consideration of the relation between the magnitudes of these amounts of output reduction.

The method of controlling the fuel cell apparatus 15, the control apparatus 20, and the power generation system 10 of the present example may be the same as those in any of the first embodiment, the first to fourth examples of the first embodiment, the second embodiment, and the first example of the second embodiment, except for the characteristics described above.

### (Third Example)

A method for controlling the fuel cell apparatus 15 of the present example is the same as that in the second embodiment, except for the control performed by the controller 23 described below.

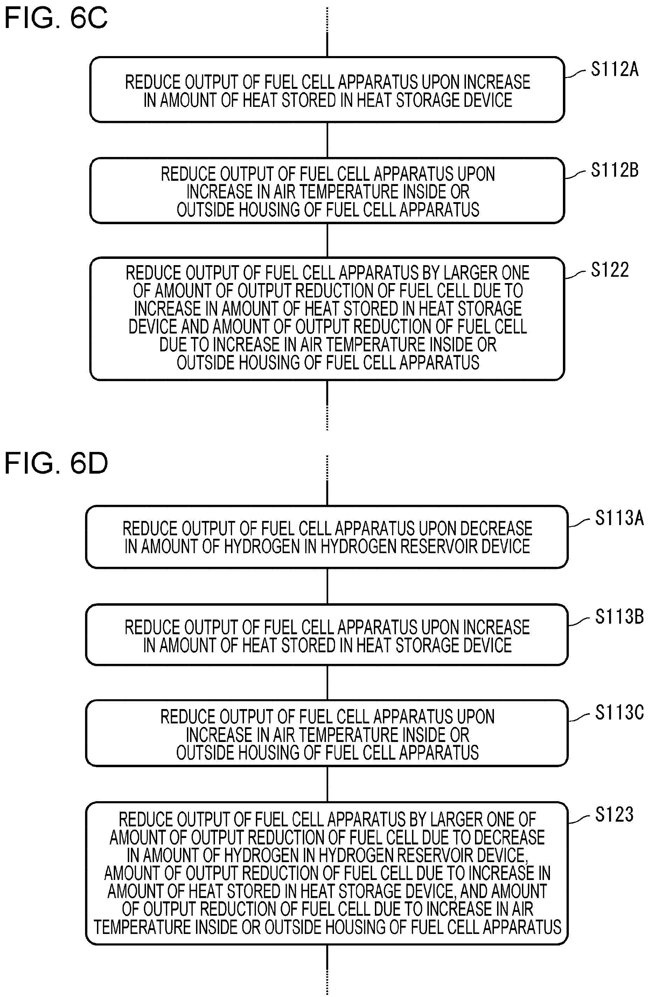

Fig. 6C is a flowchart illustrating an example of the operation of the control apparatus in the power generation system (a fuel cell apparatus control method) in a third example of the second embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S112A, the output of the fuel cell apparatus 15 is reduced upon an increase in the amount of heat stored in the heat storage device 50 that stores exhaust heat from the fuel cell apparatus 15.

Also, while the power generation system 10 is generating power, in Step S112B, the output of the fuel cell apparatus 15 is reduced upon an increase in the air temperature inside or outside the housing of the fuel cell apparatus 15.

Then, in Step S122, when the output reduction of the fuel cell apparatus 15 due to an increase in the amount of heat stored in the heat storage device 50 (the operation in Step S112A) and the output reduction of the fuel cell apparatus 15 due to an increase in the air temperature inside or outside the housing of the fuel cell apparatus 15 (the operation in Step S112B) are both executed, the output of the fuel cell apparatus 15 is reduced by the larger one of the amount of the output reduction of the fuel cell apparatus 15 due to an increase in the amount of heat stored in the heat storage device 50 and the amount of the output reduction of the fuel cell apparatus 15 due to an increase in the air temperature inside or outside the housing of the fuel cell apparatus 15.

Note that the operation of the control apparatus 20 described above is merely exemplary and is not limited to the present example. For example, the timing of the operation in Step S112A and the timing of the operation in Step S112B may be the same or may be reversed in order.

The fuel cell apparatus 15 has an optimal temperature range as its operation temperature, and if the amount of heat stored in the heat storage device 50 increases to the full storage amount, it is difficult for the exhaust heat from the fuel cell apparatus 15 to be properly collected. Then, there is a higher possibility of the operation temperature of the fuel cell apparatus 15 exceeding the optimal temperature range. Also, the higher the air temperature inside or outside the housing of the fuel cell apparatus 15, the higher the possibility of the operation temperature of the fuel cell apparatus 15 exceeding the optimal temperature range. Hence, in those cases, the output of the fuel cell apparatus 15 needs to be reduced.

Thus, according to the present example, the output of the fuel cell apparatus 15 is reduced by the larger one of the amounts of output reduction of the fuel cell apparatus 15 executed in the two steps described above, so that the possibility of the operation temperature of the fuel cell apparatus 15 exceeding the optimal temperature range can be lowered, compared to a case where the output of the fuel cell apparatus 15 is controlled without consideration of the relation between the magnitudes of these amounts of output reduction.

The method of controlling the fuel cell apparatus 15, the control apparatus 20, and the power generation system 10 of the present example may be the same as those in any of the first embodiment, the first to fourth examples of the first embodiment, the second embodiment, and the first to second examples of the second embodiment, except for the characteristics described above.

### (Fourth Example)

A method for controlling the fuel cell apparatus 15 of the present example is the same as that in the second embodiment, except for the control performed by the controller 23 described below.

Fig. 6D is a flowchart illustrating an example of the operation of the control apparatus in the power generation system (a fuel cell apparatus control method) in a fourth example of the second embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S113A, the output of the fuel cell apparatus 15 is reduced upon a decrease in the amount of hydrogen in the hydrogen reservoir device 40.

Also, while the power generation system 10 is generating power, in Step S113B, the output of the fuel cell apparatus 15 is reduced upon an increase in the amount of heat stored in the heat storage device 50 that stores exhaust heat from the fuel cell apparatus 15.

Also, while the power generation system 10 is generating power, in Step S113C, the output of the fuel cell apparatus 15 is reduced upon an increase in the air temperature inside or outside the housing of the fuel cell apparatus 15.

Then, in Step S123, when the output reduction of the fuel cell apparatus 15 due to a decrease in the amount of hydrogen in the hydrogen reservoir device 40 (the operation in Step S113A), the output reduction of the fuel cell apparatus 15 due to an increase in the amount of heat stored in the heat storage device 50 (the operation in Step S113B), and the output reduction of the fuel cell apparatus 15 due to an increase in the air temperature inside or outside the housing of the fuel cell apparatus 15 (the operation in Step S113C) are all executed, the output of the fuel cell apparatus 15 is reduced by the largest one of the amount of the output reduction of the fuel cell apparatus 15 due to a decrease in the amount of hydrogen in the hydrogen reservoir device 40, the amount of the output reduction of the fuel cell apparatus 15 due to an increase in the amount of heat stored in the heat storage device 50, and the amount of the output reduction of the fuel cell apparatus 15 due to an increase in the air temperature inside or outside the housing of the fuel cell apparatus 15.

Note that the operation of the control apparatus 20 described above is merely exemplary and is not limited to the present example. For example, the timing of the operation in Step S113A, the timing of the operation in Step S113B, and the timing of the operation in Step S113C may be the same, or these operations may be performed in an order different from the order in Fig. 6D.

The smaller the amount of hydrogen in the hydrogen reservoir device 40, the higher the possibility of the fuel cell apparatus 15 running out of hydrogen needed for power generation. Hence, in that case, the output of the fuel cell apparatus 15 needs to be reduced. Also, the fuel cell apparatus 15 has an optimal temperature range as its operation temperature, and if the amount of heat stored in the heat storage device 50 increases to the full storage amount, it is difficult for the exhaust heat from the fuel cell apparatus 15 to be properly collected. Then, there is a higher possibility of the operation temperature of the fuel cell apparatus 15 exceeding the optimal temperature range. Also, the higher the air temperature inside or outside the housing of the fuel cell apparatus 15, the higher the possibility of the operation temperature of the fuel cell apparatus 15 exceeding the optimal temperature range. Hence, in those cases, the output of the fuel cell apparatus 15 needs to be reduced.

Thus, according to the present example, the output of the fuel cell apparatus 15 is reduced by the largest one of the amounts of output reduction of the fuel cell apparatus 15 executed in the three steps described above, so that the possibility of the fuel cell apparatus 15 running out of hydrogen needed for power generation and the possibility of the operation temperature of the fuel cell apparatus 15 exceeding the optimal temperature range can both be lowered, compared to a case where the output of the fuel cell apparatus 15 is controlled without consideration of the relation between the magnitudes of these amounts of output reduction.

The method of controlling the fuel cell apparatus 15, the control apparatus 20, and the power generation system 10 of the present example may be the same as those in any of the first embodiment, the first to fourth examples of the first embodiment, the second embodiment, and the first to third examples of the second embodiment, except for the characteristics described above.

### (Third Embodiment)

The method for controlling the fuel cell apparatus 15 of the present embodiment is the same as the method for controlling the fuel cell apparatus 15 of the first embodiment or the second embodiment, except for the control performed by the controller 23 described below.

In the method for controlling the fuel cell apparatus 15 of the present embodiment, if the amount of hydrogen in the hydrogen reservoir device 40 becomes equal to or smaller than a threshold A, information indicating a prompt to replenish the hydrogen reservoir device 40 with hydrogen is presented as a notification on a display. The threshold A is an example of the "first threshold" of the present disclosure.

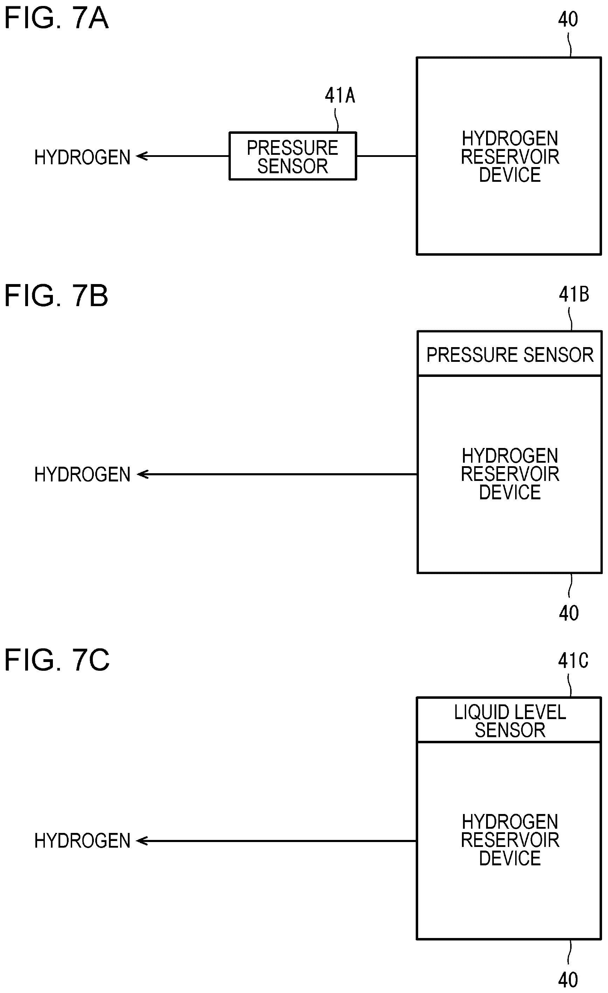

If the hydrogen reservoir device 40 is a high-pressure gas tank, the amount of hydrogen in the hydrogen reservoir device 40 can be derived from the pressure of hydrogen gas. The pressure of hydrogen gas may be measured with a pressure sensor 41A provided on a hydrogen gas flow channel extending from the hydrogen reservoir device 40 to the fuel cell apparatus 15 as illustrated in Fig. 7A or may be measured with a pressure sensor 41B provided at the hydrogen reservoir device 40 as illustrated in Fig. 7B.

If the hydrogen reservoir device 40 is a liquid hydrogen tank, the amount of hydrogen in the hydrogen reservoir device 40 may be measured with a liquid level sensor 41C provided at the hydrogen reservoir device 40 as illustrated in Fig. 7C.

Also, in the method for controlling the fuel cell apparatus 15 of the present embodiment, if the amount of hydrogen in the hydrogen reservoir device 40 becomes equal to or smaller than a threshold B which is smaller than the threshold A, the output of the fuel cell apparatus 15 is reduced. The threshold B is an example of the "second threshold" of the present disclosure.

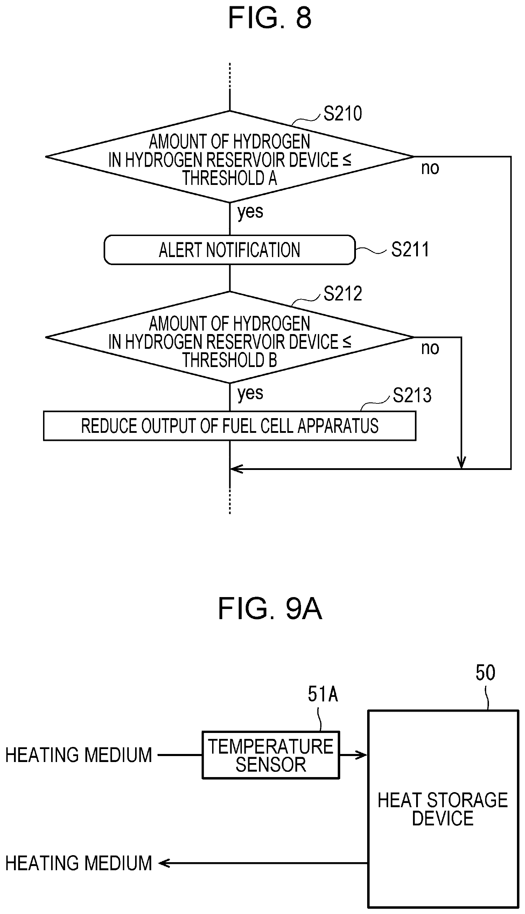

Fig. 8 is a flowchart illustrating an example of the operation of the control apparatus in the power generation system (a fuel cell apparatus control method) of the third embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S210, it is determined whether or not the amount of hydrogen in the hydrogen reservoir device 40 is equal to or smaller than the threshold A.

If the amount of hydrogen in the hydrogen reservoir device 40 is equal to or smaller than the threshold A ("yes" in Step S210), in Step S211, information indicating a prompt to replenish the hydrogen reservoir device 40 with hydrogen is presented as an alert notification on the display.

Next, while the power generation system 10 is generating power, in Step S212, it is determined that whether or not the amount of hydrogen in the hydrogen reservoir device 40 is equal to or smaller than the threshold B which is smaller than the threshold A.

If the amount of hydrogen in the hydrogen reservoir device 40 is equal to or smaller than the threshold B ("yes" in Step S212), in Step S213, the output of the fuel cell apparatus 15 is reduced. In this Step S213, the power generation plan for the power generation system 10 may be modified to reduce the output of the fuel cell apparatus 15 based on the amount of hydrogen in the hydrogen reservoir device 40. For example, in a case where the fuel cell apparatus 15 includes a plurality of power generation units including a fuel cell stack, if the amount of hydrogen in the hydrogen reservoir device 40 becomes equal to or smaller than a predetermined amount, the power generation plan may be modified to decrease the number of power generation units that generate power by a predetermined number. Also, if the amount of hydrogen in the hydrogen reservoir device 40 becomes zero, the power generation plan may be modified so that the number of the power generation units that generate power may be zero.

Note that if the amount of hydrogen in the hydrogen reservoir device 40 is not equal to or smaller than the threshold A in Step S210 ("no" in Step S210) and if the amount of hydrogen in the hydrogen reservoir device 40 is not equal to or smaller than the threshold B in Step S212 ("no" in Step S212), the operations in and after Step S210 are executed again at appropriate times.

According to the present embodiment described above, if the amount of hydrogen in the hydrogen reservoir device 40 becomes equal to or smaller than the threshold A, information indicating a prompt to replenish the hydrogen reservoir device 40 with hydrogen is presented as a notification on the display, so that at appropriate times, the hydrogen reservoir device 40 can be replenished with hydrogen that the fuel cell apparatus 15 needs to generate power, compared to a case where such information is not presented as a notification on the display. This consequently lowers the possibility of restricting the output of the fuel cell apparatus 15.

Also, because the output of the fuel cell apparatus 15 is reduced if the amount of hydrogen in the hydrogen reservoir device becomes equal to or smaller than the threshold B which is smaller than the threshold A, the possibility of the fuel cell apparatus 15 running out of hydrogen needed for power generation can be lowered, compared to a case where such output reduction is not performed.

The method for controlling the fuel cell apparatus 15, the control apparatus 20, and the power generation system 10 of the present embodiment may be the same as those of any of the first embodiment, the first to fourth examples of the first embodiment, the second embodiment, and the first to fourth examples of the second embodiment, except for the characteristics described above.

### (Fourth Embodiment)

The method for controlling the fuel cell apparatus 15 of the present embodiment is the same as the method for controlling the fuel cell apparatus 15 of the first embodiment, except for the control performed by the controller 23 described below.

**In** the method for controlling the fuel cell apparatus 15 of the present embodiment, if the temperature of the heating medium collecting the exhaust heat from the fuel cell apparatus 15 (hereinafter referred to as the heating medium) becomes equal to or larger than a threshold C, information indicating a prompt to increase the flow rate of the heating medium is presented as a notification on the display. The threshold C is an example of the "third example" of the present disclosure.

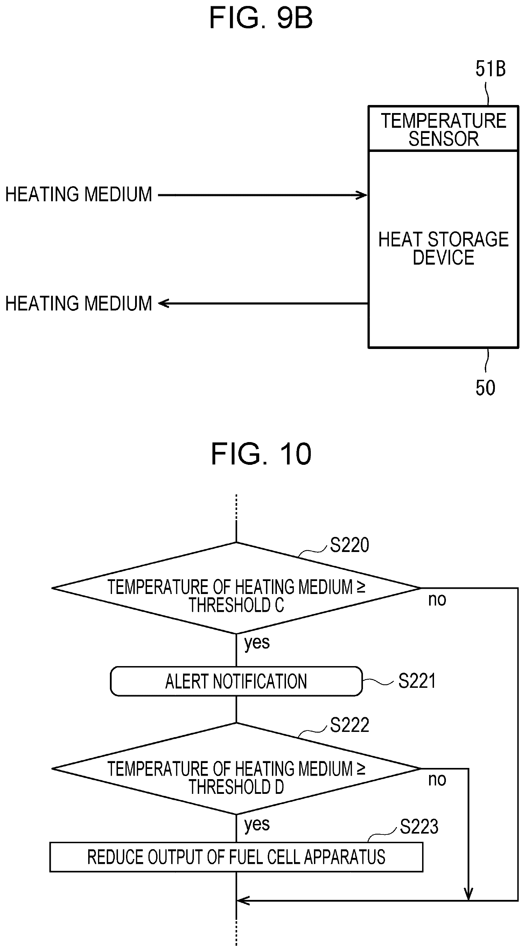

The temperature of the heating medium may be measured with a temperature sensor 51A provided on a heating medium flow channel in which the heating medium that has collected exhaust heat from the fuel cell apparatus 15 flows as illustrated in Fig. 9A or may be measured with a temperature sensor 51B provided at the heat storage device 50 as illustrated in Fig. 9B. **In** a case where the power generation system 10 is not provided with the heat storage device 50, the temperature measured with the temperature sensor 51A is used as the temperature of the heating medium. Examples of the temperature sensor 51A and the temperature sensor 51B may include, but are not limited to, a thermistor, a thermocouple, and the like.

Also, in the method for controlling the fuel cell apparatus 15 of the present embodiment, if the temperature of the heating medium becomes equal to or larger than a threshold D which is larger than the threshold C, the output of the fuel cell apparatus 15 is reduced. The threshold D is an example of the "fourth threshold" of the present disclosure.

Fig. 10 is a flowchart illustrating an example of the operation of the control apparatus in the power generation system (a fuel cell apparatus control method) in the fourth embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S220, it is determined whether or not the temperature of the heating medium is equal to or larger than the threshold C.

If the temperature of the heating medium becomes equal to or larger than the threshold C ("yes" in Step S220), in Step S221, information indicating a prompt to increase the flow rate of the heating medium is presented as an alert notification on the display.

Next, while the power generation system 10 is generating power, in Step S222, it is determined whether or not the temperature of the heating medium is equal to or larger than the threshold D which is larger than the threshold C.

If the temperature of the heating medium becomes equal to or larger than the threshold D ("yes" in Step S222), in Step S223, the output of the fuel cell apparatus 15 is reduced. In this Step S223, the power generation plan for the power generation system 10 may be modified to reduce the output of the fuel cell apparatus 15 based on the temperature of the heating medium. For example, in a case where the fuel cell apparatus 15 includes a plurality of power generation units including a fuel cell stack, if the temperature of the heating medium becomes equal to or higher than a predetermined temperature, the power generation plan may be modified to decrease the number of power generation units that generate power by a predetermined number. Further, the power generation plan for the power generation system 10 may be modified as follows: the amount of output reduction of the fuel cell apparatus 15 due to a decrease in the amount of hydrogen in the hydrogen reservoir device 40 (the third embodiment) is compared with the amount of output reduction of the fuel cell apparatus 15 due to an increase in the temperature of the heating medium (the present embodiment), and the output is reduced by the larger one of these amounts of output reduction.

Note that if the temperature of the heating medium is not equal to or larger than the threshold C in Step S220 ("no" in Step S220) and if the temperature of the heating medium is not equal to or larger than the threshold D in Step S222 ("no" in Step S222), the operations in and after Step S220 are executed again at appropriate times.

The higher the flow rate of the heating medium collecting exhaust heat from the fuel cell apparatus 15, the larger the amount of exhaust heat from the fuel cell apparatus 15 that the heating medium collects and therefore the easier it is for the operation temperature of the fuel cell apparatus 15 to be kept within the optimal temperature range.

Thus, in the method for controlling the fuel cell apparatus 15 of the present embodiment, if the temperature of the heating medium becomes equal to or larger than the threshold C, information indicating a prompt to increase the flow rate of the heating medium is presented as a notification on the display, so that the operation temperature of the fuel cell apparatus 15 can be easily kept within the optimal temperature range, compared to a case where such information is not presented as a notification on the display. This consequently lowers the possibility of restricting the output of the fuel cell apparatus 15.

Also, in the method for controlling the fuel cell apparatus 15 of the present embodiment, if the temperature of the heating medium becomes equal to or larger than the threshold D which is larger than the threshold C, the output of the fuel cell apparatus is reduced, so that the possibility of the operation temperature of the fuel cell apparatus 15 exceeding the optimal temperature range can be lowered, compared to a case where such output reduction is not performed.

The method for controlling the fuel cell apparatus 15, the control apparatus 20, and the power generation system 10 of the present embodiment may be the same as those of any of the first embodiment, the first to fourth examples of the first embodiment, the second embodiment, the first to fourth examples of the second embodiment, and the third embodiment, except for the characteristics described above.

### (Fifth Embodiment)

The method for controlling the fuel cell apparatus 15 of the present embodiment is the same as the method for controlling the fuel cell apparatus 15 of the second embodiment, except for the control performed by the controller 23 described below.

**In** the method for controlling the fuel cell apparatus 15 of the present embodiment, if the amount of heat stored in the heat storage device 50 that stores exhaust heat from the fuel cell apparatus 15 becomes equal to or larger than a threshold E, information indicating a prompt to use the heat in the heat storage device 50 is presented as a notification on the display. The threshold E is an example of the "fifth threshold" of the present disclosure.

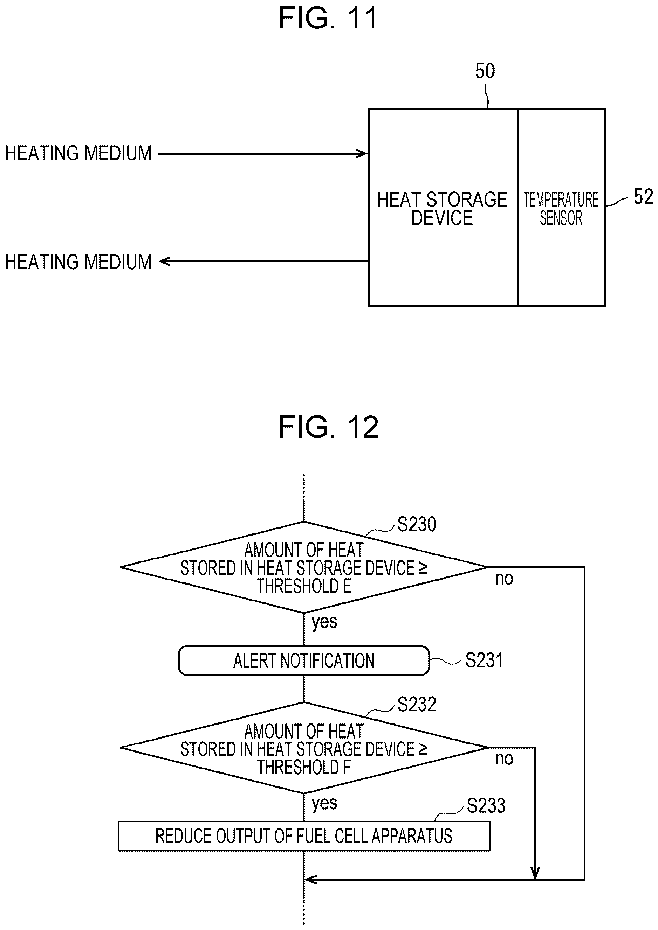

**In** a case where the heat storage device 50 is a hot-water storage tank that stores water as an example of the heating medium, the amount of heat stored in the heat storage device 50 can be derived using a temperature sensor 52 that measures the temperature of water in the hot-water storage tank, as illustrated in Fig. 11. Specifically, typically, normal-temperature water is taken out from a lower part of the hot-water storage tank. This water is supplied into the fuel cell apparatus 15 through the heating medium flow channel and is then heated up by collecting exhaust heat from the fuel cell apparatus 15. Then, the hot water is returned to an upper part of the hot-water storage tank through the heating medium flow channel. Thus, the amount of heat stored in the heat storage device 50 can be tracked by measuring the temperature of the water in the hot-water storage tank using a plurality of temperature detectors disposed at a side portion of the hot-water storage tank at predetermined intervals. Note that the "prompt to use the heat in the heat storage device 50" corresponds to a prompt to supply hot water from the hot-water storage tank to a heat-using device that a heat consumer uses in a case where the heat storage device 50 is the hot-water storage tank. Examples of the temperature sensor 52 may include, but are not limited to, a thermistor, a thermocouple, and the like.

Also, in the method for controlling the fuel cell apparatus 15 of the present embodiment, if the amount of heat stored in the heat storage device 50 becomes equal to or larger than a threshold F which is larger than the threshold E, the output of the fuel cell apparatus 15 is reduced. The threshold F is an example of the "sixth threshold" of the present disclosure.

Fig. 12 is a flowchart illustrating an example of the operation of the control apparatus in the power generation system (a fuel cell apparatus control method) in the fifth embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S230, it is determined whether or not the amount of heat stored in the heat storage device 50 is equal to or larger than the threshold E.

If the amount of heat stored in the heat storage device 50 becomes equal to or larger than the threshold E ("yes" in Step S230), in Step S231, information indicating a prompt to use heat in the heat storage device 50 is presented as an alert notification on the display.

Next, while the power generation system 10 is generating power, in Step S232, it is determined whether or not the amount of heat stored in the heat storage device 50 is equal to or larger than the threshold F which is larger than the threshold E.

If the amount of heat stored in the heat storage device 50 becomes equal to or larger than the threshold F ("yes" in Step S232), in Step S233, the output of the fuel cell apparatus 15 is reduced. In this Step S233, the power generation plan for the power generation system 10 may be modified to reduce the output of the fuel cell apparatus 15 based on the amount of heat stored in the heat storage device 50. For example, in a case where the fuel cell apparatus 15 includes a plurality of power generation units including a fuel cell stack, when the amount of heat stored in the heat storage device 50 becomes equal to or larger than a predetermined amount, the power generation plan may be modified to decrease, by a predetermined number, the number of power generation units which generate power and the exhaust heat from which is stored in the heat storage device 50. Also, if the amount of heat stored in the heat storage device 50 is at the full storage state, the power generation plan may be modified so that the number of the power generation units which generate power and the exhaust heat from which is stored in the heat storage device 50 may be zero. Further, the power generation plan for the power generation system 10 may be modified as follows: the amount of output reduction of the fuel cell apparatus 15 due to a decrease in the amount of hydrogen in the hydrogen reservoir device 40 (the third embodiment) is compared with the amount of output reduction of the fuel cell apparatus 15 due to an increase in the amount of heat stored in the heat storage device 50 (the present embodiment), and the output is reduced by the larger one of these amounts of output reduction.

Note that if the amount of heat stored in the heat storage device 50 is not equal to or larger than the threshold E in Step S230 ("no" in Step S230) and if the amount of heat stored in the heat storage device 50 is not equal to or larger than the threshold F in Step S232 ("no" in Step S232), the operations in and after Step S230 are executed again at appropriate times.

The more the heat in the heat storage device 50 is promoted to be used, the more room there will be in the heat storage device 50 to store exhaust heat from the fuel cell apparatus 15 and therefore the easier it is for the operation temperature of the fuel cell apparatus 15 to be kept within the optimal temperature range.

Thus, in the method for controlling the fuel cell apparatus 15 of the present embodiment, if the amount of heat stored in the heat storage device 50 becomes equal to or larger than the threshold E, information indicating a prompt to use heat in the heat storage device 50 is presented as a notification on the display, so that usage of heat in the heat storage device 50 can be promoted at appropriate times to keep the operation temperature of the fuel cell apparatus 15 within the optimal temperature range, compared to a case where such information is not presented as a notification on the display. This consequently lowers the possibility of restricting the output of the fuel cell apparatus 15.

Also, in the method for controlling the fuel cell apparatus 15 of the present embodiment, if the amount of heat stored in the heat storage device 50 becomes equal to or larger than the threshold F which is larger than the threshold E, the output of the fuel cell apparatus 15 is reduced, so that the possibility of the operation temperature of the fuel cell apparatus 15 exceeding the optimal temperature range can be lowered compared to a case where such output reduction is not performed.

The method for controlling the fuel cell apparatus 15, the control apparatus 20, and the power generation system 10 of the present embodiment may be the same as those of any of the first embodiment, the first to fourth examples of the first embodiment, the second embodiment, the first to fourth examples of the second embodiment, the third embodiment, and the fourth embodiment, except for the characteristics described above.

### (Sixth Embodiment)

The method for controlling the fuel cell apparatus 15 of the present embodiment is the same as the method for controlling the fuel cell apparatus 15 of the first embodiment or the second embodiment, except for the control performed by the controller 23 described below.

In the method for controlling the fuel cell apparatus 15 of the present embodiment, if the air temperature inside or outside the housing of the fuel cell apparatus 15 becomes equal to or larger than a threshold G, information indicating that the fuel cell apparatus 15 is abnormally hot is presented as a notification on the display. The threshold G is an example of the "seventh threshold" of the present disclosure. Examples of the threshold G include, but are not limited to, approximately 40 °C.

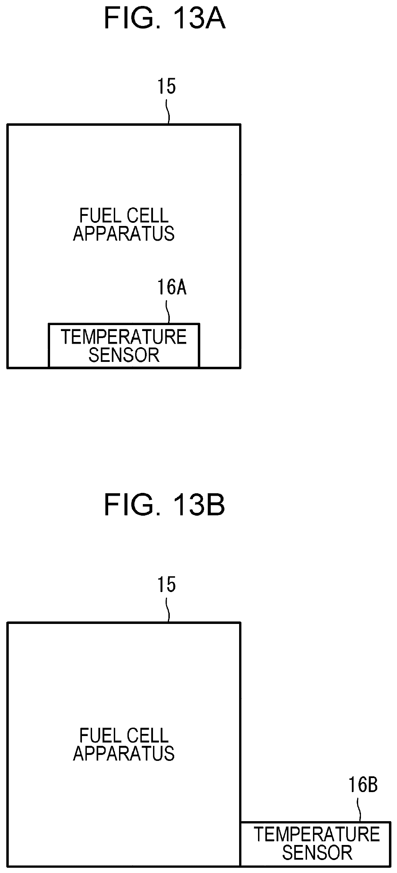

The air temperature inside the housing of the fuel cell apparatus 15 may be measured with a temperature sensor 16A provided at an appropriate location inside the housing, as illustrated in Fig. 13A. The air temperature outside the housing of the fuel cell apparatus 15 may be measured with a temperature sensor 16B provided at an appropriate location outside the housing, as illustrated in Fig. 13B. The temperature sensor 16A may be, for example, a temperature sensor for freezing prevention provided near the floor surface of the housing, but is not limited to this. The temperature sensor 16B may be, for example, a temperature sensor for outside air monitoring, but is not limited to this. The air temperature inside or outside the housing of the fuel cell apparatus 15 may be an average value of data measured with a plurality of temperature sensors. Examples of the temperature sensor 16A and the temperature sensor 16B include, but are not limited to, a thermistor, a thermocouple, and the like.

Also, in the method for controlling the fuel cell apparatus 15 of the present embodiment, if the air temperature inside or outside the housing of the fuel cell apparatus 15 becomes equal to or larger than a threshold H which is larger than the threshold G, the output of the fuel cell apparatus 15 is reduced. The threshold H is an example of the "eighth threshold" of the present disclosure. Examples of the threshold H may include, but are not limited to, approximately 43 °C.

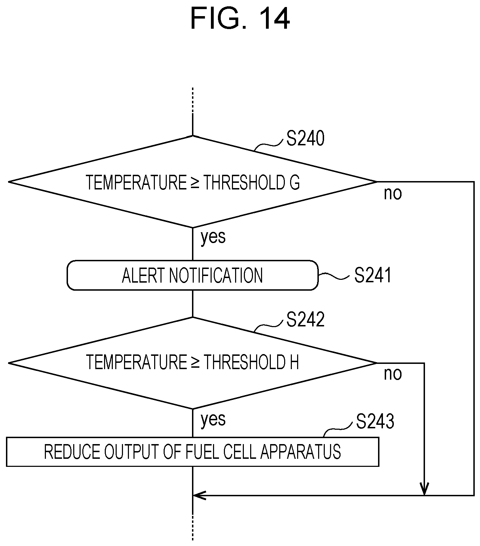

Fig. 14 is a flowchart illustrating an example of the operation of the control apparatus in the power generation system (a fuel cell apparatus control method) of the sixth embodiment. The operation below may be performed when, for example, the computation unit of the controller 23 reads the control program from the storage unit of the controller 23. However, it is not necessarily essential that the following operation be performed by the controller 23. An operator may perform part of the operation. The following example describes a case where the operation is controlled by the controller 23.

First, while the power generation system 10 is generating power, in Step S240, it is determined whether or not the air temperature inside or outside the housing of the fuel cell apparatus 15 is equal to or larger than the threshold G.

If the air temperature inside or outside the housing of the fuel cell apparatus 15 is equal to or larger than the threshold G ("yes" in Step S240), in Step S241, information indicating that the fuel cell apparatus 15 is abnormally hot is presented as an alert notification on the device.

Next, while the power generation system 10 is generating power, in Step S242, it is determined whether or not the air temperature inside or outside the housing of the fuel cell apparatus 15 is equal to or larger than the threshold H which is larger than the threshold G.

If the air temperature inside or outside the housing of the fuel cell apparatus 15 is equal to or larger than the threshold H ("yes" in Step S242), in Step S243, the output of the fuel cell apparatus 15 is reduced. In this Step S243, the power generation plan for the power generation system 10 may be modified to reduce the output of the fuel cell apparatus 15 based on the air temperature inside or outside the housing of the fuel cell apparatus 15. For example, in a case where the fuel cell apparatus 15 includes a plurality of power generation units including a fuel cell stack, when the air temperature inside or outside the housing of the fuel cell apparatus 15 becomes equal to or higher than a predetermined temperature, the power generation plan may be modified to decrease the number of power generation units that generate power by a predetermined number. Further, the power generation plan for the power generation system 10 may be modified as follows: the amount of output reduction of the fuel cell apparatus 15 due to a decrease in the amount of hydrogen in the hydrogen reservoir device 40 (the third embodiment) is compared with the amount of output reduction of the fuel cell apparatus 15 due to an increase in the air temperature inside or outside the housing of the fuel cell apparatus 15 (the present embodiment), and the output is reduced by the larger one of these amounts of output reduction. Also, the power generation plan for the power generation system 10 may be modified as follows: the amount of output reduction of the fuel cell apparatus 15 due to a decrease in the amount of hydrogen in the hydrogen reservoir device 40 (the third embodiment), the amount of output reduction of the fuel cell apparatus 15 due to an increase in the temperature of the heating medium (the fourth embodiment), and the amount of output reduction of the fuel cell apparatus 15 due to an increase in the air temperature inside or outside the housing of the fuel cell apparatus 15 (the present embodiment) are compared to each other, and the output is reduced by the largest one of these amounts of output reduction. Also, the power generation plan for the power generation system 10 may be modified as follows: the amount of output reduction of the fuel cell apparatus 15 due to a decrease in the amount of hydrogen in the hydrogen reservoir device 40 (the third embodiment), the amount of output reduction of the fuel cell apparatus 15 due to an increase in the amount of heat stored in the heat storage device 50 (the fifth embodiment), and the amount of output reduction of the fuel cell apparatus 15 due to an increase in the air temperature inside or outside the housing of the fuel cell apparatus 15 (the present embodiment) are compared to each other, and the output is reduced by the largest one of these amounts of output reduction.

Note that if the air temperature inside or outside the housing of the fuel cell apparatus 15 is not equal to or larger than the threshold G in Step S240 ("no" in Step S240) and if the air temperature inside or outside the housing of the fuel cell apparatus 15 is not equal to or larger than the threshold H in Step S242 ("no" in Step S242), the operations in and after Step S240 are executed again at appropriate times.

According to the present embodiment described above, if the air temperature inside or outside the housing of the fuel cell apparatus 15 becomes equal to or larger than the threshold G, information indicating that the fuel cell apparatus 15 is abnormally hot is presented as a notification on the display, so that an operation for cooling the fuel cell apparatus 15 can be performed at appropriate times to keep the operation temperature of the fuel cell apparatus 15 within the optimal temperature range, compared to a case where such information is not presented as a notification on the device. This consequently lowers the possibility of restricting the output of the fuel cell apparatus 15.

Also, if the air temperature inside or outside the housing of the fuel cell apparatus 15 becomes equal to or larger than the threshold H which is larger than the threshold G, the output of the fuel cell apparatus 15 is reduced, so that the possibility of the operation temperature of the fuel cell apparatus 15 exceeding the optimal temperature range can be lowered compared to a case where such output reduction is not performed.

The method for controlling the fuel cell apparatus 15, the control apparatus 20, and the power generation system 10 of the present embodiment may be the same as those of any of the first embodiment, the first to fourth examples of the first embodiment, the second embodiment, the first to fourth examples of the second embodiment, the third embodiment, the fourth embodiment, and the fifth embodiment, except for the characteristics described above.

### (Seventh Embodiment)

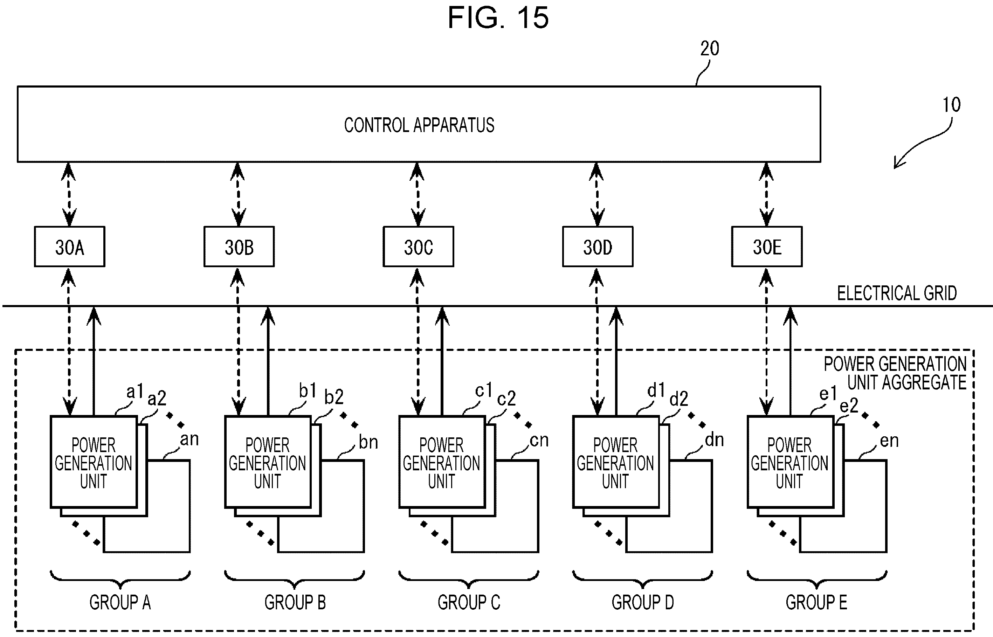

Fig. 15 is a diagram illustrating an example of a power generation system of a seventh embodiment. For the sake of convenience, Fig. 15 omits illustration of the hydrogen reservoir device 40 and the heat storage device 50 in the first embodiment (Fig. 1).

As illustrated in Fig. 15, the power generation system 10 of the present embodiment includes the fuel cell apparatus 15 (see Fig. 1), the control apparatus 20, and control apparatuses 30A to 30E. The configuration of the control apparatus 20 is the same as that in the first embodiment and is therefore not described in detail here.

**In** the example illustrated in Fig. 15, the power generation system 10 includes a power generation unit aggregate formed by a plurality of power generation units including a fuel cell stack. This power generation unit aggregate has groups of the plurality of power generation units. Although not illustrated in the drawing, these power generation units are each formed by a fuel cell stack, a DC conversion device that converts DC power generated by the fuel cell stack into AC power and outputs the AC power to the electrical grid, a control device that controls the operation of these devices, and the like.

In this example, the power generation unit aggregate is formed by the following groups: power generation units a1 to an belonging to a group A, power generation units b1 to bn belonging to a group B, power generation units c1 to cn belonging to a group C, power generation units d1 to dn belonging to a group D, and power generation units e1 to en belonging to a group E. All the power generation units belonging to one group may be referred to simply as "a power generation unit in a group."

Note, however, that the configuration of the power generation unit aggregate above is merely exemplary and is not limited to this example. For example, the power generation unit aggregate may have a single croup of power generation units. Also, there may be a single power generation unit in a group.

The control apparatuses 30A to 30E are provided for the power generation units a1 to an in the group A, the power generation units b1 to bn in the group B, the power generation units c1 to cn in the group C, the power generation units d1 to dn in the group D, and the power generation units e1 to en in the group E, respectively, and control the operations of the power generation units in the respective groups.

For example, the control apparatus 30A controls the outputs of the power generation units a1 to an belonging to the group A via the communication network so that the power generation units a1 to an can operate efficiently (e.g., lifetime optimization). Note that the control apparatuses 30A to 30E may directly control the operations of the power generation units belonging to the respective groups, with no control apparatus provided in the power generation units.

There is no limitation as to the control apparatuses 30A to 30E as long as they have a control function, and the control apparatuses 30A to 30E each include a computation unit (not illustrated), a storage unit that stores a control program, and a communicator. The control apparatuses 30A to 30E perform predetermined control when the computation unit reads and executes the control program stored in the storage unit. A microprocessor is an example of the computation unit. A memory is an example of the storage unit.

As described earlier, the controller 23 of the control apparatus 20 (see Fig. 2) reduces the output of the fuel cell apparatus 15 by the largest one of the amount of output reduction of the fuel cell apparatus 15 due to a decrease in the amount of hydrogen in the hydrogen reservoir device 40, the amount of output reduction of the fuel cell apparatus 15 due to an increase in the temperature of the heating medium, and the amount of output reduction of the fuel cell apparatus 15 due to an increase in the air temperature inside or outside the housing of the fuel cell apparatus 15; however, the present disclosure is not limited to this. A control apparatus other than the controller 23 of the control apparatus 20 (e.g., the control apparatuses 30A to 30E) may execute such output reduction of the fuel cell apparatus 15.

Also, as described earlier, the controller 23 of the control apparatus 20 (see Fig. 2) reduces the output of the fuel cell apparatus 15 by the largest one of the amount of output reduction of the fuel cell apparatus 15 due to a decrease in the amount of hydrogen in the hydrogen reservoir device 40, the amount of output reduction of the fuel cell apparatus 15 due to an increase in the amount of heat stored in the heat storage device 50, and the amount of output reduction of the fuel cell apparatus 15 due to an increase in the air temperature inside or outside the housing of the fuel cell apparatus 15; however, the present disclosure is not limited to this. A control apparatus other than the controller 23 of the control apparatus 20 (e.g., the control apparatuses 30A to 30E) may execute such output reduction of the fuel cell apparatus 15.

The advantageous effects offered by the power generation system 10 of the present embodiment are the same as the advantageous effects described in the first embodiment or the second embodiment and are therefore not described here.

The configuration of the power generation system 10 above is merely exemplary and is not limited to this example. For example, the control apparatus 20 may be integral with the control apparatuses 30A to 30E, or in other words, may have the control functions of the control apparatuses 30A to 30E incorporated therein, and control the operations of the power generation units in a group directly.

The method for controlling the fuel cell apparatus 15, the control apparatus 20, and the power generation system 10 of the present embodiment may be the same as those of any of the first embodiment, the first to fourth examples of the first embodiment, the second embodiment, the first to fourth examples of the second embodiment, the third embodiment, the fourth embodiment, the fifth embodiment, and the sixth embodiment, except for the characteristics described above.

The first embodiment, the first to fourth examples of the first embodiment, the second embodiment, the first to fourth examples of the second embodiment, the third embodiment, the fourth embodiment, the fifth embodiment, the sixth embodiment, and the seventh embodiment may be combined with each other unless they exclude each other. Based on the description given above, many alternations and other embodiments of the present disclosure are obvious to those skilled in the art. Hence, the above descriptions should be interpreted only as exemplary and has been provided for the purpose of teaching those skilled in the art the best modes for carrying out the present disclosure. The present disclosure can be substantially modified in the details of its structures and/or functions without departing from the spirit thereof.

### Industrial Applicability

**In** an aspect of the present disclosure, a fuel cell apparatus control method, a control apparatus, and a power generation system can be used, with which the output of the fuel cell apparatus can be properly controlled by taking into consideration not only the amount of hydrogen in a hydrogen reservoir device, but also the temperature of a heating medium collecting exhaust heat from the fuel cell apparatus, the amount of heat stored in a heat storage device that stores exhaust heat from the fuel cell apparatus, or the air temperature inside or outside the housing of the fuel cell apparatus, unlike the prior art. Reference Signs List

10 power generation system
15 fuel cell apparatus
16A temperature sensor
16B temperature sensor
20 control apparatus
21 communicator
23 controller
30A control apparatus
30B control apparatus
30C control apparatus
30D control apparatus
30E control apparatus
40 hydrogen reservoir device
41A pressure sensor
41B pressure sensor
41C liquid level sensor
50 heat storage device
51A temperature sensor
51B temperature sensor
52 temperature sensor
a1 to an power generation unit
b1 to bn power generation unit
c1 to cn power generation unit
d1 to dn power generation unit
e1 to en power generation unit

## Claims

1. A fuel cell apparatus control method, comprising at least two of the steps of:
reducing an output of a fuel cell apparatus that generates power using hydrogen from a hydrogen reservoir device upon a decrease in an amount of hydrogen in the hydrogen reservoir device;
reducing the output of the fuel cell apparatus upon an increase in a temperature of a heating medium that collects exhaust heat from the fuel cell apparatus; and
reducing the output of the fuel cell apparatus upon an increase in an air temperature inside or outside a housing of the fuel cell apparatus, wherein
when the at least two of the steps are all executed, the output of the fuel cell apparatus is reduced by a largest one of amounts of output reduction of the fuel cell apparatus executed in the respective steps.

2. The fuel cell apparatus control method according to claim 1, wherein
the at least two of the steps are the step of reducing the output of the fuel cell apparatus that generates power using hydrogen from the hydrogen reservoir device upon the decrease in the amount of hydrogen in the hydrogen reservoir device and the step of reducing the output of the fuel cell apparatus upon the increase in the temperature of the heating medium that collects exhaust heat from the fuel cell apparatus, and
when the output reduction of the fuel cell apparatus due to the decrease in the amount of hydrogen in the hydrogen reservoir device and the output reduction of the fuel cell apparatus due to the increase in the temperature of the heating medium are both executed, the output of the fuel cell apparatus is reduced by a larger one of an amount of the output reduction of the fuel cell apparatus due to the decrease in the amount of hydrogen in the hydrogen reservoir device and an amount of the output reduction of the fuel cell apparatus due to the increase in the temperature of the heating medium.

3. The fuel cell apparatus control method according to claim 1, wherein
the at least two of the steps are the step of reducing the output of the fuel cell apparatus that generates power using hydrogen from the hydrogen reservoir device upon the decrease in the amount of hydrogen in the hydrogen reservoir device and the step of reducing the output of the fuel cell apparatus upon the increase in the air temperature inside or outside the housing of the fuel cell apparatus, and
when the output reduction of the fuel cell apparatus due to the decrease in the amount of hydrogen in the hydrogen reservoir device and the output reduction of the fuel cell apparatus due to the increase in the air temperature inside or outside the housing of the fuel cell apparatus are both executed, the output of the fuel cell apparatus is reduced by a larger one of an amount of the output reduction of the fuel cell apparatus due to the decrease in the amount of hydrogen in the hydrogen reservoir device and an amount of the output reduction of the fuel cell apparatus due to the increase in the air temperature inside or outside the housing of the fuel cell apparatus.

4. The fuel cell apparatus control method according to claim 1, wherein
the at least two of the steps are the step of reducing the output of the fuel cell apparatus upon the increase in the temperature of the heating medium that collects exhaust heat from the fuel cell apparatus and the step of reducing the output of the fuel cell apparatus upon the increase in the air temperature inside or outside the housing of the fuel cell apparatus, and
when the output reduction of the fuel cell apparatus due to the increase in the temperature of the heating medium and the output reduction of the fuel cell apparatus due to the increase in the air temperature inside or outside the housing of the fuel cell apparatus are both executed, the output of the fuel cell apparatus is reduced by a larger one of an amount of the output reduction of the fuel cell apparatus due to the increase in the temperature of the heating medium and an amount of the output reduction of the fuel cell apparatus due to the increase in the air temperature inside or outside the housing of the fuel cell apparatus.

5. The fuel cell apparatus control method according to claim 1, wherein
the at least two of the steps are the step of reducing the output of the fuel cell apparatus that generates power using hydrogen from the hydrogen reservoir device upon the decrease in the amount of hydrogen in the hydrogen reservoir device, the step of reducing the output of the fuel cell apparatus upon the increase in a temperature of the heating medium that collects exhaust heat from the fuel cell apparatus, and the step of reducing the output of the fuel cell apparatus upon the increase in the air temperature inside or outside the housing of the fuel cell apparatus, and
when the output reduction of the fuel cell apparatus due to the decrease in the amount of hydrogen in the hydrogen reservoir device, the output reduction of the fuel cell apparatus due to the increase in the temperature of the heating medium, and the output reduction of the fuel cell apparatus due to the increase in the air temperature inside or outside the housing of the fuel cell apparatus are all executed, the output of the fuel cell apparatus is reduced by a largest one of an amount of the output reduction of the fuel cell apparatus due to the decrease in the amount of hydrogen in the hydrogen reservoir device, an amount of the output reduction of the fuel cell apparatus due to the increase in the temperature of the heating medium, and an amount of the output reduction of the fuel cell apparatus due to the increase in the air temperature inside or outside the housing of the fuel cell apparatus.

6. A fuel cell apparatus control method comprising at least two of the steps of:
reducing the output of the fuel cell apparatus that generates power using hydrogen from the hydrogen reservoir device upon the decrease in an amount of hydrogen in the hydrogen reservoir device;
reducing the output of the fuel cell apparatus upon an increase in an amount of heat stored in a heat storage device that stores exhaust heat from the fuel cell apparatus; and
reducing the output of the fuel cell apparatus upon the increase in the air temperature inside or outside the housing of the fuel cell apparatus, wherein
when the at least two of the steps are all executed, the output of the fuel cell apparatus is reduced by a largest one of amounts of output reduction of the fuel cell apparatus executed in the respective steps.

7. The fuel cell apparatus control method according to claim 6, wherein
the at least two of the steps are the step of reducing the output of the fuel cell apparatus that generates power using hydrogen from the hydrogen reservoir device upon the decrease in the amount of hydrogen in the hydrogen reservoir device and the step of reducing the output of the fuel cell apparatus upon the increase in the amount of heat stored in the heat storage device that stores exhaust heat from the fuel cell apparatus, and
when the output reduction of the fuel cell apparatus due to the decrease in the amount of hydrogen in the hydrogen reservoir device and the output reduction of the fuel cell apparatus due to the increase in the amount of heat stored in the heat storage device are both executed, the output of the fuel cell apparatus is reduced by a larger one of an amount of the output reduction of the fuel cell apparatus due to the decrease in the amount of hydrogen in the hydrogen reservoir device and an amount of the output reduction of the fuel cell apparatus due to the increase in the amount of heat stored in the heat storage device.

8. The fuel cell apparatus control method according to claim 6, wherein
the at least two of the steps are the step of reducing the output of the fuel cell apparatus that generates power using hydrogen from the hydrogen reservoir device upon the decrease in the amount of hydrogen in the hydrogen reservoir device and the step of reducing the output of the fuel cell apparatus upon the increase in the air temperature inside or outside the housing of the fuel cell apparatus, and
when the output reduction of the fuel cell apparatus due to the decrease in the amount of hydrogen in the hydrogen reservoir device and the output reduction of the fuel cell apparatus due to the increase in the air temperature inside or outside the housing of the fuel cell apparatus are both executed, the output of the fuel cell apparatus is reduced by a larger one of an amount of the output reduction of the fuel cell apparatus due to the decrease in the amount of hydrogen in the hydrogen reservoir device and an amount of the output reduction of the fuel cell apparatus due to the increase in the air temperature inside or outside the housing of the fuel cell apparatus.

9. The fuel cell apparatus control method according to claim 6, wherein
the at least two of the steps are the step of reducing the output of the fuel cell apparatus upon the increase in the amount of heat stored in the heat storage device that stores exhaust heat from the fuel cell apparatus and the step of reducing the output of the fuel cell apparatus upon the increase in the air temperature inside or outside the housing of the fuel cell apparatus,
when the output reduction of the fuel cell apparatus due to the increase in the amount of heat stored in the heat storage device and the output reduction of the fuel cell apparatus due to the increase in the air temperature inside or outside the housing of the fuel cell apparatus are both executed, the output of the fuel cell apparatus is reduced by a larger one of an amount of the output reduction of the fuel cell apparatus due to the increase in the amount of heat stored in the heat storage device and an amount of the output reduction of the fuel cell apparatus due to the increase in the air temperature inside or outside the housing of the fuel cell apparatus.

10. The fuel cell apparatus control method according to claim 6, wherein
the at least two of the steps are the step of reducing the output of the fuel cell apparatus that generates power using hydrogen from the hydrogen reservoir device upon the decrease in the amount of hydrogen in the hydrogen reservoir device, the step of reducing the output of the fuel cell apparatus upon the increase in the amount of heat stored in the heat storage device that stores exhaust heat from the fuel cell apparatus, and the step of reducing the output of the fuel cell apparatus upon the increase in the air temperature inside or outside the housing of the fuel cell apparatus, and
when the output reduction of the fuel cell apparatus due to the decrease in the amount of hydrogen in the hydrogen reservoir device, the output reduction of the fuel cell apparatus due to the increase in the amount of heat stored in the heat storage device, and the output reduction of the fuel cell apparatus due to the increase in the air temperature inside or outside the housing of the fuel cell apparatus are all executed, the output of the fuel cell apparatus is reduced by a largest one of an amount of the output reduction of the fuel cell apparatus due to the decrease in the amount of hydrogen in the hydrogen reservoir device, an amount of the output reduction of the fuel cell apparatus due to the increase in the amount of heat stored in the heat storage device, and an amount of the output reduction of the fuel cell apparatus due to the increase in the air temperature inside or outside the housing of the fuel cell apparatus.

11. The fuel cell apparatus control method according to any one of claims 2, 3, 5, 7, 8, and 10, wherein
if the amount of hydrogen in the hydrogen reservoir device becomes equal to or smaller than a first threshold, information indicating a prompt to replenish the hydrogen reservoir device with hydrogen is presented as a notification on a display, and
if the amount of hydrogen in the hydrogen reservoir device becomes equal to or smaller than a second threshold which is smaller than the first threshold, the output of the fuel cell apparatus is reduced.

12. The fuel cell apparatus control method according to any one of claims 2, 4, and 5, wherein
if the temperature of the heating medium becomes equal to or larger than a third threshold, information indicating a prompt to increase a flow rate of the heating medium is presented as a notification on a display, and
if the temperature of the heating medium becomes equal to or larger than a fourth threshold which is larger than the third threshold, the output of the fuel cell apparatus is reduced.

13. The fuel cell apparatus control method according to any one of claims 7, 9, and 10, wherein
if the amount of heat stored in the heat storage device becomes equal to or larger than a fifth threshold, information indicating a prompt to use heat in the heat storage device is presented as a notification on a display, and
if the amount of heat stored in the heat storage device becomes equal to or larger than a sixth threshold which is larger than the fifth threshold, the output of the fuel cell apparatus is reduced.

14. The fuel cell apparatus control method according to any one of claims 3 to 5 and 8 to 10, wherein
if the air temperature inside or outside the housing of the fuel cell apparatus becomes equal to or larger than a seventh threshold, information indicating that the fuel cell apparatus is abnormally hot is presented as a notification on a display, and
if the air temperature inside or outside the housing of the fuel cell apparatus becomes equal to or larger than an eighth threshold which is larger than the seventh threshold, the output of the fuel cell apparatus is reduced.

15. A control apparatus comprising:
a communicator that receives at least two of the following pieces of information: information indicating an amount of hydrogen in a hydrogen reservoir device, information indicating a temperature of a heating medium that collects exhaust heat from a fuel cell apparatus that generates power using hydrogen from the hydrogen reservoir device, and information indicating an air temperature inside or outside a housing of the fuel cell apparatus; and
a controller that executes at least two of the following controls: control to reduce an output of the fuel cell apparatus upon a decrease in the amount of hydrogen in the hydrogen reservoir device, control to reduce the output of the fuel cell apparatus upon an increase in the temperature of the heating medium, and control to reduce the output of the fuel cell apparatus upon an increase in the air temperature inside or outside the housing of the fuel cell apparatus, wherein
when the at least two of the controls are all executed, the controller reduces the output of the fuel cell apparatus by a largest one of amounts of output reduction of the fuel cell apparatus executed by the respective controls.

16. A control apparatus comprising:
a communicator that receives at least two of the following pieces of information: information indicating an amount of hydrogen in a hydrogen reservoir device, information indicating an amount of heat stored in a heat storage device that stores exhaust heat from a fuel cell apparatus that generates power using hydrogen from the hydrogen reservoir device, and information indicating an air temperature inside or outside a housing of the fuel cell apparatus; and
a controller that executes at least two of the following controls: control to reduce an output of the fuel cell apparatus upon a decrease in the amount of hydrogen in the hydrogen reservoir device, control to reduce the output of the fuel cell apparatus upon an increase in the amount of heat stored in the heat storage device, and control to reduce the output of the fuel cell apparatus upon an increase in the air temperature inside or outside the housing of the fuel cell apparatus, wherein
when the at least two of the controls are all executed, the controller reduces the output of the fuel cell apparatus by a largest one of amounts of output reduction of the fuel cell apparatus executed by the respective controls.

17. A power generation system comprising:
a fuel cell apparatus and
the control apparatus according to claim 15 or 16.
